(19) Europäisches Patentamt / European Patent Office / Office européen des brevets

(11) **EP 2 754 691 B1**

(12) **EUROPEAN PATENT SPECIFICATION**

(45) Date of publication and mention
of the grant of the patent:
**10.02.2016 Bulletin 2016/06**

(21) Application number: **12829959.1**

(22) Date of filing: **06.09.2012**

(51) Int Cl.:
***C08L 53/00*** (2006.01)  ***C08J 5/04*** (2006.01)
***C08K 7/02*** (2006.01)  ***C08K 5/20*** (2006.01)
***C08L 23/00*** (2006.01)  ***C08L 25/00*** (2006.01)

(86) International application number:
**PCT/JP2012/072681**

(87) International publication number:
**WO 2013/035764 (14.03.2013 Gazette 2013/11)**

(54) **FIBER-REINFORCED POLYPROPYLENE RESIN COMPOSITION AND MOLDED ARTICLE THEREOF**

FASERVERSTÄRKTE POLYPROPYLENHARZZUSAMMENSETZUNG UND FORMARTIKEL DARAUS

COMPOSITION DE RÉSINE POLYPROPYLÈNE RENFORCÉE PAR DES FIBRES, ET CORPS MOULÉ ASSOCIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.09.2011 JP 2011195794**

(43) Date of publication of application:
**16.07.2014 Bulletin 2014/29**

(73) Proprietor: **Japan Polypropylene Corporation**
**Tokyo 100-8251 (JP)**

(72) Inventors:
• **KONDO Kazumasa**
**Yokkaichi-shi**
**Mie 510-0848 (JP)**

• **MASUDA Kenji**
**Yokkaichi-shi**
**Mie 510-0848 (JP)**

(74) Representative: **Hoffmann Eitle**
**Patent- und Rechtsanwälte PartmbB**
**Arabellastraße 30**
**81925 München (DE)**

(56) References cited:
JP-A- 2003 147 159     JP-A- 2005 220 272
JP-A- 2005 248 156     JP-A- 2006 240 519
JP-A- 2007 211 189     JP-A- 2007 211 190
JP-A- 2010 121 119     JP-A- 2012 062 360
JP-A- 2012 067 245     JP-A- 2012 087 263
JP-A- 2012 211 264     US-A1- 2005 113 517

EP 2 754 691 B1

**Description**

TECHNICAL FIELD

The present invention relates to a fiber reinforced polypropylene resin composition and a moulded article thereof and more specifically, to a fiber reinforced polypropylene resin composition which has low shrinkage, has excellent grain transferability, flaw resistance and moulded appearance, can provide a moulded article having a smooth and soft tactile sensation on the surface thereof without requiring foaming, and has high rigidity, high impact strength and high heat resistance, and a moulded article thereof.

BACKGROUND ART

Polypropylene resin compositions are resin compositions having excellent physical properties, moldability, recycling efficiency and economic efficiency and therefore have wide applications. Particularly in the fields of automobile parts such as instrument panels and pillars and parts for electric devices such as televisions and vacuum cleaners, polypropylene resin compositions such as polypropylene resins and composite polypropylene resins which are reinforced polypropylene resins with fillers such as glass fibers and elastomers (rubbers) are widely used, including moulded articles thereof, in various fields because of excellent moldability, balanced physical properties, recycling efficiency and economic efficiency thereof.

In these fields, in order to address increasing demands for moulded articles of polypropylene resin compositions having high functionalities, large sizes and various complicated applications, particularly having high quality in the field of automobile interior parts, the polypropylene resin compositions and moulded articles thereof are required to have improved moldability and balanced physical properties as well as to have deteriorated moulding shrinkage ratio (improved fidelity to the mould) which significantly affect the texture of the compositions and moulded articles, and improved grain transferability, flaw resistance, moulded appearance and tactile sensation of the surface of moulded articles.

It has been a widely carried out practice to add a filler such as glass fibers or talc to polypropylene resin compositions and moulded articles thereof in order to improve the rigidity (strength) of the resin compositions and moulded articles thereof. For example, Patent Document 1 discloses a polyolefin resin composition with high strength and high rigidity having a mechanical strength equivalent to a glass fiber reinforced polyamide resin, which corresponds to a polyolefin thermoplastic resin composition having high strength and high rigidity and comprising (A) a mixture mainly containing a polypropylene obtained by two or more stages of sequential polymerization, wherein an ethylene-propylene copolymer rubber in the mixture has an average dispersed particle diameter of 2 $\mu$m or less; (B) a polyolefin resin; and (C) a filler having an average diameter of 0.01 to 1000 $\mu$m and an average aspect ratio (length/diameter) of 5 to 2500 at 0.1 to 200 parts by weight relative to 100 parts by weight of the total of the (A) and (B) components. It is described that the moulded article of the composition has high tensile strength, flexural strength, Izod impact strength, falling weight impact strength and flexural modulus. However, no description is made on the level of shrinkage which significantly affects the texture of the moulded article, or grain transferability, flaw resistance or tactile sensation such as the degree of surface hardness (softness), and thus the levels thereof are not known.

In the fields of applications for which polypropylene resin compositions and moulded articles thereof are applied, the surface quality of moulded articles such as automobile interior parts which are closely exposed to people's attention and directly touched by people is extremely important. Namely, improvement in the quality may result in improvement in texture of the moulded articles, providing a luxurious feeling. Examples of the texture may involve the finish (low shrinkage and preferable dimensional accuracy) and grain transferability of moulded articles. With regard to the former texture among these, Patent Document 2 discloses a composition having high rigidity and flexural rigidity without sacrificing dimensional stability, which corresponds to a fibrous inorganic filler-containing resin composition comprising (A) a polypropylene polymer and/or polyethylene having a density of 0.94 g/cm$^3$ or more at 75 to 98% by weight, (B) a specific ethylene (co) polymer at 2 to 25% by weight, and (C) 5 to 45 parts by weight of fibrous inorganic filler relative to 100 parts by weight of (A) + (B). It is described that the composition exhibits, in addition to high tensile strength, flexural modulus, Izod impact strength and the like, significantly low moulding shrinkage ratio (in MD). However, no description is made on grain transferability, flaw resistance and tactile sensation, and thus the levels thereof are not known.

Moulded articles for automobile interior parts and the like may be often provided on the surface thereof with a grained design in order to improve the texture by providing mat feeling and the like. It is the "grain transferability" of the moulded material that is important on this occasion.

With regard to the grain transferability, Patent Document 3 discloses an automobile interior part which satisfies specific requirements including flaw resistance, is obtained by thermoforming a propylene-ethylene block copolymer composition comprising a propylene-ethylene block copolymer at 20 to 90% by weight and a thermoplastic elastomer at 10 to 80% by weight selected from olefin elastomers and styrene elastomers and has specific scratch resistance and hardness. It is described that the automobile interior part moulded article has flexibility and has excellent mould grain transferability, tactile sensation, flaw resistance and the like. However, no description is made on rigidity, impact strength or moulding shrinkage ratio, and thus the levels thereof are not known. However, because the moulded article does not contain a filler and the like, as demonstrated by the flexibility thereof described above, it is inferred that the moulded article has relatively low flexural modulus and relatively high moulding shrinkage ratio.

Meanwhile, with regard to the tactile sensation among texture, improvement mainly in softness (flexibility) and reduction in stickiness is often required and thus improved materials therefore have been proposed.

For example, Patent Document 4 discloses a material having flowability, foaming ability and flexibility in combination, that corresponds to a thermoplastic elastomer composition for expansion injection moulding obtained by mixing 100 parts by weight of thermoplastic elastomer (II), 10 to 100 parts by weight of ethylene-$\alpha$-olefin copolymer (G) and 1 to 50 parts by weight of styrene thermoplastic elastomer (H), wherein the thermoplastic elastomer (II) is obtained by adding, to 100 parts by weight of an olefin thermoplastic elastomer (I), 1 to 20 parts by weight of specific polypropylene resin (D), 1 to 20 parts by weight of specific propylene-$\alpha$-olefin copolymer rubber (E) and 1 to 30 parts by weight of a flexibilizer (F), and the olefin thermoplastic elastomer (I) is obtained by dynamic heat treatment of, in the presence of a crosslinking agent, a mixture containing 10 to 60 parts by weight of specific polypropylene resin (A), 40 to 90 parts by weight of ethylene copolymer rubber (B) and 0 to 50 parts by weight of flexibilizer (C) (provided that the total amount of the components (A), (B) and (C) is 100 parts by weight). It is described that the composition and expansion moulded article thereof have a value of flexibility (JIS-A hardness) from which preferable flowability and a soft tactile sensation are inferred. However, expansion moulding is required in order to obtain moulded articles, resulting in an increase in cost, and no specific description is made on flaw resistance, rigidity or impact strength, and thus the levels thereof are not known.

Patent Document 5 discloses a thermoplastic elastomer composition having surface properties with an excellent tactile sensation (no stickiness or sliminess, anti-fouling and flaw resistance), free from the element that causes generation of hazardous gas and having preferable processability, which corresponds to a composition obtained by adding, to 100 parts by weight of ethylene-propylene copolymer and hydrogenated diene copolymer mixed composition, 0.2 to 5.0 parts by weight of a higher fatty acid amide and 0.05 to 5.0 parts by weight of surfactant, the ethylene-propylene copolymer and hydrogenated diene copolymer mixed composition containing 80 to 50 parts by weight of hydrogenated diene copolymer and 20 to 50 parts by weight of ethylene-propylene copolymer. It is described that the composition has excellent surface properties (tactile sensation (stickiness), flaw resistance). However, this technique may be difficult to apply to the fields such as automobile interior parts which require further improved rigidity and strength.

Further, compositions having improved physical properties and tactile sensation have also been proposed. For example, Patent Document 6 discloses a polymer moulding composition which is suitable for producing moulded articles having preferable rigidity, high scratch resistance and a highly comfortable and soft tactile sensation, which corresponds to a polymer moulding composition at least comprising 5 to 90% by weight of soft material, 5 to 60% by weight of glass material as a filler and 3 to 70% by weight of thermoplastic polymer in combination. It is described that the composition and moulded article have preferable rigidity, low surface hardness, high scratch resistance and a comfortable and soft tactile sensation. However, no description is made on moulding shrinkage ratio, grain transferability, flaw resistance, flexural modulus or impact strength and thus the levels thereof are unknown.

Meanwhile, automobile parts of polypropylene resin compositions are often moulded by injection moulding in view of productivity. However, injection moulding may generate defects in appearance such as weld lines and flow marks. In order to eliminate these defects in appearance, painting is optionally provided. However, this may make the production process of automobile parts complicated, resulting in an increase in cost. Patent Document 7 for example discloses a material having excellent moulded appearance which corresponds to a propylene resin composition comprising (A) 40 to 99 parts by weight of propylene block copolymer prepared by using a specific catalyst, (B) 0 to 35 parts by weight of elastomer and (E) 1 to 40 parts by weight of filler. It is described that the composition and a moulded article thereof have preferable moulded appearance, preferable balance between rigidity and impact resistance and high flowability during injection moulding. However, no description is made on grain transferability or tactile sensation and thus the levels thereof are unknown.

As described above, polypropylene resin compositions and moulded articles thereof are often required to include fibers (fibrous filler) such as glass fibers in order to improve rigidity and impact strength thereof, resulting in deterioration of grain transferability, flaw resistance and tactile sensation such as softness of the surface of the moulded articles, while polypropylene resin compositions and moulded articles thereof are also required to include elastomers or soft polyolefins in most cases in order to improve tactile sensation, resulting in deterioration of flaw resistance, rigidity and heat resistance. Thus it has been difficult to simultaneously improve the above properties.

CITATION LIST

PATENT LITERATURE

Patent Document 1: Japanese Patent Application Publication No. 2002-3691

Patent Document 2: Japanese Patent Application Publication No. H7-48481

Patent Document 3: Japanese Patent Application Publication No. 2011-79924

Patent Document 4: Japanese Patent Application Publication No. 2002-206034

Patent Document 5: Japanese Patent Application Publication No. H7-292212

Patent Document 6: Published Japanese Translation of PCT Application No. 2009-506177

Patent Document 7: Japanese Patent Application Publication No. 2011-132294

SUMMARY OF INVENTION

TECHNICAL PROBLEM

With the foregoing in view, it is an object of the present invention to provide a fiber reinforced polypropylene resin composition which has low shrinkage, preferable grain transferability, flaw resistance and moulded appearance, can provide a moulded article having a smooth and soft tactile sensation on the surface thereof and has high rigidity, high impact strength and high heat resistance, as well as a method for producing thereof and a moulded article thereof.
It is a further object of the present invention to solve the problems accompanying with conventional polypropylene resin compositions and moulded articles thereof and produce a polypropylene resin composition suitable for various moulded articles such as, among others, moulded articles for automobile parts and a moulded article thereof by using economically advantageous components with a simple production method.

SOLUTION TO PROBLEM

To solve the problems, the present inventors have found, as a result of extensive studies, that a fiber reinforced propylene resin composition which comprises a specific propylene-ethylene block copolymer, a fiber material and optionally a specific modified polyolefin, a thermoplastic elastomer and/or a propylene polymer resin at specific proportions and a moulded article obtained therefrom can solve the above problems, thereby achieving the present invention.
Thus a first invention provides a fiber reinforced polypropylene resin composition comprising a propylene-ethylene block copolymer (I) at 40% by weight to 99% by weight and a fiber (II) at 1% by weight to 60% by weight, both of which are defined hereinbelow (provided that the total amount of (I) and (II) is 100% by weight), wherein
the propylene-ethylene block copolymer (I) satisfies the following requirements (I-i) to (I-iv):

(I-i) : the propylene-ethylene block copolymer (I) is obtained by sequentially polymerizing, using a metallocene catalyst, 30% by weight to 95% by weight of propylene alone or propylene-ethylene random copolymer component (I-A) having an ethylene content of 7% by weight or less in a first step and 70% by weight to 5% by weight of propylene-ethylene random copolymer component (I-B) having an ethylene content that is 3% by weight to 20% by weight higher than that of the component (I-A) in a second step;
(I-ii): the propylene-ethylene block copolymer (I) has a melting peak temperature (Tm), as measured by DSC, of 110°C to 150°C;
(I-iii): the propylene-ethylene block copolymer (I) shows a single peak on a tan 5 curve at or below 0°C in a temperature-loss tangent curve obtained by a solid viscoelasticity measurement; and
(I-iv) : the propylene-ethylene block copolymer (I) has a melt flow rate (MFR: 230°C, 2.16 kg load) of 0.5 g/10 min to 200 g/10 min, and wherein

the fiber (II) satisfies the following requirement (II-i):

(II-i) : the fiber (II) is at least one selected from the group consisting of a glass fiber, a carbon fiber, a whisker and an organic fiber having a melting point of 245°C or more.

The second invention provides the fiber reinforced polypropylene resin composition according to the first invention, wherein the fiber (II) is the glass fiber.

The third invention provides the fiber reinforced polypropylene resin composition according to the second invention, wherein the glass fiber has a length of 2 mm or more and 20 mm or less.

The fourth invention provides the fiber reinforced polypropylene resin composition according to any of the first to third inventions, further contains at least one selected from the group consisting of a modified polyolefin (III) at 0 to 10 parts by weight, a thermoplastic elastomer (IV) at 0 to 30 parts by weight, a propylene polymer resin (V) at 0 to 50 parts by weight and a fatty acid amide (VI) at 0 to 3 parts by weight, all of which are defined hereinbelow, relative to a total amount of (I) and (II) of 100 parts by weight,

wherein the modified polyolefin (III) satisfies the following requirement (III-i):

(III-i): the modified polyolefin (III) is an acid modified polyolefin and/or a hydroxy modified polyolefin;

the thermoplastic elastomer (IV) satisfies the following requirements (IV-i) and (IV-ii):

(IV-i) : the thermoplastic elastomer (IV) has a density of 0.86 g/cm$^3$ to 0.92 g/cm$^3$;

(IV-ii) : the thermoplastic elastomer (IV) has a melt flow rate (230°C, 2.16 kg load) of 0.5 g/10 min to 100 g/10 min;

the propylene polymer resin (V) is a resin other than the propylene-ethylene block copolymer (I) and satisfies the following requirement (V-i);

(V-i): the propylene polymer resin (V) has a melt flow rate (230°C, 2.16kg load) of 0.5 g/10 min to 300 g/10 min; and

the fatty acid amide (VI) satisfies the following requirement (VI-i):

(VI-i): the fatty acid amide (VI) is represented by the following formula (A):

$$RCONH_2 \qquad \text{Formula (A)}$$

(where, R is a linear aliphatic hydrocarbon group having 10 to 25 carbon atoms).

The fifth invention provides the fiber reinforced polypropylene resin composition according to the fourth invention, wherein the propylene polymer resin (V) further satisfies the following requirement (V-ii):

(V-ii): the propylene polymer resin (V) is a propylene-ethylene block copolymer resin containing a propylene homopolymer moiety at 30% by weight to 80% by weight and a propylene-ethylene copolymer moiety at 20% by weight to 70% by weight (where a total amount of the propylene homopolymer moiety and the propylene-ethylene copolymer moiety is 100% by weight), wherein the propylene-ethylene copolymer moiety has an ethylene content of 20% by weight to 60% by weight.

The sixth invention provides a method for producing the fiber reinforced polypropylene resin composition according to any of the first to fifth inventions, the method including a kneading step of melt-kneading the propylene-ethylene block copolymer (I) and the fiber (II).

The seventh invention provides the method for producing the fiber reinforced polypropylene resin composition according to the sixth invention, wherein the kneading step includes kneading a component other than the fiber (II) prior to adding the fiber (II).

The eighth invention provides the method for producing the fiber reinforced polypropylene resin composition according to the sixth or seventh invention, wherein the fiber (II) (except for the whisker) in a resin composition pellet or a moulded article obtained after the kneading step has an average length, as measured on a digital microscope, of 0.3 mm or more and 2.5 mm or less.

The ninth invention provides a moulded article obtained by moulding the fiber reinforced polypropylene resin composition according to any of the first to fifth inventions.

The tenth invention provides a moulded article obtained by moulding a fiber reinforced polypropylene resin composition produced by the method according to any of the sixth to eighth inventions.

The eleventh invention provides the moulded article according to the ninth or tenth invention, which has a grained surface.

The twelfth invention provides the moulded article according to the eleventh invention, which has a gloss ratio between a grained surface gloss value and a mirror surface gloss value, which corresponds to grained surface gloss value/mirror surface gloss value of 0.030 or less.

The thirteenth invention provides the moulded article according to any of the ninth to twelfth inventions, which has an average of a moulding shrinkage ratio in a resin flow direction (MD) and a moulding shrinkage ratio in the direction (TD) perpendicular to the resin flow direction of 4.0/1000 or less.

The fourteenth invention provides the moulded article according to any of the ninth to thirteenth inventions, which has a flaw resistance according to a 5-finger method of 6 N or more.

The fifteenth invention provides the moulded article according to any of the ninth to fourteenth inventions, which has HDD (D hardness)/flexural modulus (MPa) of 0.060 or less.

The sixteenth invention provides the moulded article according to any of the ninth to fifteenth inventions, which has a deflection temperature under load (HDT), measured at a 0.45 MPa load, of 85°C or more.

The seventeenth invention provides the moulded article according to any of the ninth to sixteenth inventions, which has an excellent weld appearance.

The eighteenth invention provides the moulded article according to any of the ninth to seventeenth inventions, which is an automobile part.

## ADVANTAGEOUS EFFECTS OF INVENTION

The fiber reinforced polypropylene resin composition, the method for producing thereof and the moulded article thereof of the present invention have low shrinkage, have preferable grain transferability, flaw resistance and moulded appearance, can provide a moulded article having a smooth and soft tactile sensation on the surface thereof without foaming and have high rigidity, high impact strength and high heat resistance.

Therefore, the present invention can be suitably used for automobile parts including automobile interior and exterior parts such as instrument panels, glove compartments, console boxes, door trims, armrests, grip knobs, various trims, ceiling parts, housings, pillars, mud guards, bumpers, fenders, back doors, fan shrouds and the like as well as parts in engine compartments, parts for electric/electronic devices such as televisions and vacuum cleaners, various industrial parts, parts for household facilities such as toilet seats, building materials and the like.

## BRIEF DESCRIPTION OF DRAWING

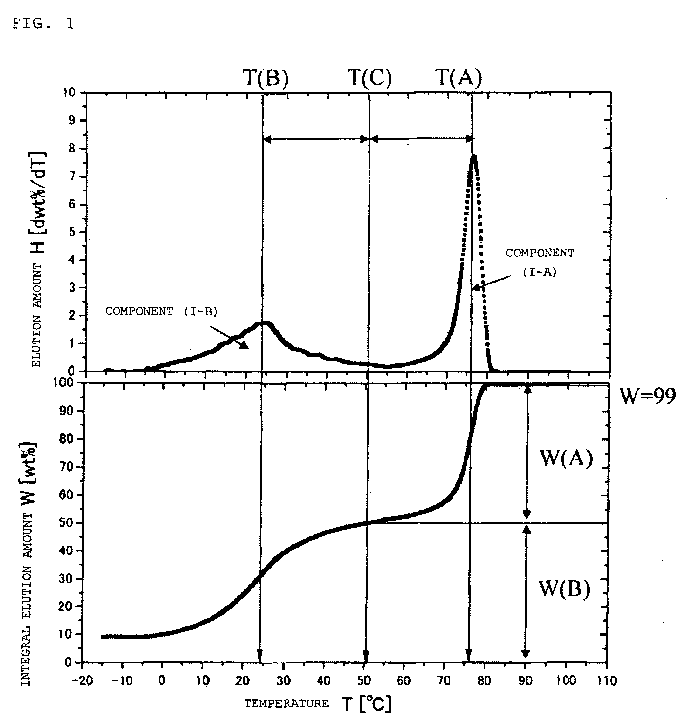

FIG. 1 shows the elution amount and the integral elution amount by temperature rising elusion fractionation (TREF).

## DESCRIPTION OF EMBODIMENTS

The present invention relates to a fiber reinforced polypropylene resin composition comprising a specific propylene-ethylene block copolymer (I) (hereinafter also merely referred to as component (I)) at 40% by weight to 99% by weight, a specific fiber (II) (hereinafter also merely referred to as component (II)) at 1% by weight to 60% by weight (provided that the total amount of (I) and (II) is 100% by weight) and optional components corresponding to a specific modified polyolefin (III) (hereinafter also merely referred to as component (III)) at 0 to 10 parts by weight, thermoplastic elastomer (IV) (hereinafter also merely referred to as component (IV)) at 0 to 30 parts by weight, propylene polymer resin (V) (hereinafter also merely referred to as component (V)) at 0 to 50 parts by weight and fatty acid amide (VI) (hereinafter also merely referred to as component (VI)) at 0 to 3 parts by weight relative to the total amount of (I) and (II) of 100 parts by weight, as well as a method for producing thereof and a moulded article thereof.

The fiber reinforced polypropylene resin composition, the method for producing thereof and the moulded article thereof of the present invention can provide the fiber reinforced polypropylene resin composition and the moulded article thereof which can solve the problems of conventional polypropylene resin compositions and moulded articles thereof, have low shrinkage and preferable grain transferability, flaw resistance and moulded appearance which properties are suitable for obtaining various moulded articles, particularly moulded articles such as automobile parts, and have high rigidity, high impact strength and high heat resistance so that the moulded article has a smooth and soft tactile sensation on the surface thereof without foaming.

The fiber reinforced polypropylene resin composition, the production method thereof and the moulded article thereof are hereinafter described in detail referring to the respective items.

I. Constituents of fiber reinforced polypropylene resin composition

1. Component (I): propylene-ethylene block copolymer (I)

The component (I) used for the present invention is a propylene-ethylene block copolymer satisfying the following requirements (I-i) to (I-iv), and is characterized in that it confers functions such as low shrinkage, preferable grain transferability, flaw resistance and moulded appearance and a smooth and soft tactile sensation without foaming on the fiber reinforced polypropylene resin composition and the moulded article thereof of the present invention (hereinafter also merely referred to as the fiber reinforced composition and the moulded article thereof).

The propylene-ethylene block copolymer as used herein refers to a so-called block copolymer obtained by sequentially polymerizing propylene alone or a propylene-ethylene random copolymer component (I-A) (hereinafter also referred to as component (I-A)) having an ethylene content of 7% by weight or less and a propylene-ethylene random copolymer component (I-B) (hereinafter also referred to as component (I-B)) having an ethylene content that is 3% by weight to 20% by weight higher than that of the component (I-A), and is not necessarily the one in which the component (I-A) binds to the component (I-B) in a complete block manner.

> (I-i): the propylene-ethylene block copolymer is obtained by sequentially polymerizing, using a metallocene catalyst, 30% by weight to 95% by weight of propylene alone or propylene-ethylene random copolymer component (I-A) having an ethylene content of 7% by weight or less in the first step and 70% by weight to 5% by weight of propylene-ethylene random copolymer component (I-B) having an ethylene content that is 3% by weight to 20% by weight higher than that of the component (I-A) in the second step.
> (I-ii) : The propylene-ethylene block copolymer has a melting peak temperature (Tm) as measured by DSC of 110°C to 150°C.
> (I-iii): The propylene-ethylene block copolymer shows a single peak on the tan $\delta$ curve at or below 0°C in the temperature-loss tangent curve obtained by a solid viscoelasticity measurement.
> (I-iv) : the propylene-ethylene block copolymer has a melt flow rate (hereinafter also referred to as MFR) (230°C, 2.16 kg load) of 0.5 g/10 min to 200 g/10 min.

(1) Requirements

(I-i)

The component (I) used for the present invention is required to be obtained by sequentially polymerizing, as described above, using a metallocene catalyst, 30% by weight to 95% by weight of propylene alone or propylene-ethylene random copolymer component (I-A) having an ethylene content of 7% by weight or less, preferably 5% by weight or less and more preferably 3% by weight or less in the first step and 70% by weight to 5% by weight of propylene-ethylene random copolymer component (I-B) having an ethylene content that is 3% by weight to 20% by weight higher, preferably 6% by weight to 18% by weight higher and more preferably 8% by weight to 16% by weight higher than that of the component (I-A) in the second step. When the difference in the ethylene content between the component (I-B) in the second step and the component (I-A) in the first step is less than 3% by weight, the fiber reinforced composition and the moulded article thereof of the present invention may have deteriorated physical properties such as low shrinkage, grain transferability, flaw resistance, tactile sensation and impact strength. When the difference is higher than 20% by weight, compatibility between the component (I-A) and the component (I-B) may be reduced.

Namely, it is required that the component (I) is obtained by sequentially polymerizing the components having the ethylene contents which differ within a predetermined range in the first and second steps, respectively, in order that the fiber reinforced composition and the moulded article thereof of the present invention exhibit low shrinkage, preferable grain transferability and flaw resistance, a smooth and soft tactile sensation without foaming and high impact strength. It is also necessary, in order to prevent the problems such as adhesion of reaction products to reactors, that the component (I-A) is polymerized prior to polymerization of the component (I-B). The ethylene content in the present application is determined according to the method described in Examples hereinbelow.

(I-ii)

It is required that the component (I) used for the present invention has a melting peak temperature (Tm) measured by DSC (differential scanning calorimetry) in the range of 110°C to 150°C, preferably 115°C to 148°C and more preferably 120°C to 145°C.

When Tm is less than 110°C, the fiber reinforced composition and the moulded article of the present invention may have a deteriorated rigidity. When Tm is higher than 150°C, tactile sensation and impact strength may be deteriorated.

The melting peak temperature (Tm) in the present application may be determined according to the method described in Examples hereinbelow.

(I-iii)

It is required that the component (I) used for the present invention shows a single peak on the tan $\delta$ curve at or below 0°C in the temperature-loss tangent curve obtained by a solid viscoelasticity measurement (DMA).

Namely, in the present invention, it is required that the component (I-A) and the component (I-B) are not under phase separation in the component (I) in order that the fiber reinforced composition and the moulded article thereof exhibit low shrinkage, preferable grain transferability and flaw resistance, a smooth and soft tactile sensation and high impact strength, and in this case, a single peak is obtained in the tan $\delta$ curve at or below 0°C.

When the component (I-A) and the component (I-B) are under phase separation, the amorphous portion in the component (I-A) has a different glass transition temperature from that of the amorphous portion in the component (I-B), resulting in multiple peaks.

The solid viscoelasticity measurement as used herein is carried out specifically by applying sinusoidal strain at a specific frequency to a strip specimen and detecting the generated stress. In the present invention, the frequency is 1 Hz and the measurement temperature is increased stepwise from -60°C until the specimen is melted so that the measurement is impossible.

The strain is recommended to be about 0.1% to 0.5%. Based on the obtained stress, the storage elastic modulus G' and the loss elastic modulus G" are determined by a well known method and the loss tangent defined by the ratio therebetween (= loss elastic modulus/storage elastic modulus) is plotted against temperature, resulting in a sharp peak in the temperature range at or below 0°C.

The peak on the tan $\delta$ curve at or below 0°C is generally used for measurement of a glass transition temperature of the amorphous portion, and this peak temperature is defined herein as the glass transition temperature Tg (°C).

(I-iv)

It is required that the component (I) used for the present invention has a MFR (230°C, 2.16kg load) in the range of 0.5 g/10 min to 200 g/10 min, preferably 3 g/10 min to 150 g/10 min and more preferably 5 g/10 min to 50 g/10 min. When the MFR is less than 0.5 g/10 min, the fiber reinforced composition and the moulded article thereof may have deteriorated low shrinkage, grain transferability and moldability (flowability). When the MFR is higher than 200 g/10 min, impact strength may be deteriorated. The MFR can be adjusted by using an agent for decreasing the molecular weight.

In the present description, MFR is measured according to JIS K7210 at a test temperature = 230°C and a load = 2.16 kg.

The component (I) may be two or more species in combination.

(2) Production method

(i) Metallocene catalyst

The production of the component (I) used for the present invention requires the use of a metallocene catalyst.

The type of the metallocene catalyst is not particularly limited as far as it allows production of the component (I) having the properties according to the present invention, and is preferably a metallocene catalyst including, for example, the following components (a) and (b) and optionally a component (c) in order to satisfy the requirements according to the present invention.

Component (a): at least one metallocene transition metal compound selected from transition metal compounds represented by the following general formula (1).
Component (b) : at least one solid component selected from the following (b-1) to (b-4).

(b-1): a fine particle carrier carrying an organic aluminium oxy compound.
(b-2): a fine particle carrier carrying a Lewis acid or an ionic compound that reacts with the component (a) to convert the component (a) into a cation.
(b-3): solid acid fine particles.
(b-4): ion exchanging laminar silicate salt.

Component (c): organic aluminium compound.

The component (a) may be at least one metallocene transition metal compound selected from the transition metal compounds represented by the following general formula (1).

$$Q(C_5H_{4-a}R^1{}_a) (C_5H_{4-b}R^2{}_b)MeXY \qquad (1)$$

[wherein Q represents a divalent bonding group for crosslinking two conjugated five-membered ring ligands; Me represents a metal atom selected from titanium, zirconium and hafnium; X and Y independently represent a hydrogen atom, a halogen atom, a hydrocarbon group, an alkoxy group, an amino group, a nitrogen-containing hydrocarbon group, a phosphorus-containing hydrocarbon group or a silicon-containing hydrocarbon group and may be the same or different each other; $R^1$ and $R^2$ represent a hydrogen, a hydrocarbon group, a halogenated hydrocarbon group, a silicon-containing hydrocarbon group, a nitrogen-containing hydrocarbon group, an oxygen-containing hydrocarbon group, a boron-containing hydrocarbon group or a phosphorus-containing hydrocarbon group; and a and b indicate the number of substituents].

Among others, the transition metal compound which is suitable for production of the component (I) may include a transition metal compound which contains a ligand having a substituted cyclopentadienyl group, a substituted indenyl group, a substituted fluorenyl group or a substituted azurenyl group crosslinked by Q which corresponds to a silylene, germylene or alkylene group having a hydrocarbon substituent, and particularly preferably a transition metal compound which contains a ligand having a 2,4-substituted indenyl group or a 2,4-substituted azurenyl group crosslinked by a silylene or germylene group having a hydrocarbon substituent.

The component (b) which is used is at least one solid component selected from the above components (b-1) to (b-4). These components are well known and can be appropriately selected from those well known in the art. Specific examples and production methods thereof can be found in Japanese Patent Application Publication Nos. 2002-284808, 2002-53609, 2002-69116, 2003-105015 and the like.

Among the above component (b), the ion exchanging laminar silicate salt of the component (b-4) is particularly preferable and still more preferably a ion exchanging laminar silicate which has been subjected to chemical treatments such as treatments with an acid, an alkaline, a salt and an organic substance.

Examples of the optional component (c), the organic aluminium compound, are halogen- or alkoxy-containing alkylaluminiums represented by the following general formula (2):

$$AlR_aP_{3-a} \qquad (2)$$

(wherein R represents a hydrocarbon group having 1 to 20 carbon atoms, P represents a hydrogen, a halogen or an alkoxy group and a represents a number of $0 < a \leq 3$) such as trialkylaluminiums including trimethylaluminium, triethylaluminium, tripropylaluminium, triisobutylaluminium and the like or diethyaluminium monochloride and diethyaluminium monomethoxide. Alternatively, aluminoxanes such as methylaluminoxane may be used. Among these, a trialkylaluminium is particularly preferred.

The catalyst is formed by contacting the component (a), the component (b) and the optional component (c). The components may be contacted according to any well known method without particular limitation as far as it allows the formation of the catalyst.

Arbitrary amounts of the components (a), (b) and (c) may be used. For example, the amount of the component (a) relative to 1 g of the component (b) may be preferably in the range of 0.1 μmol to 1000 μmol and particularly preferably 0.5 μmol to 500 μmol. The amount of the component (c) relative to 1 g of the component (b) may be preferably in the range such that the amount of the transition metal is preferably 0.001 μmol to 100 μmol and particularly preferably 0.005 μmol to 50 μmol.

The catalyst used for the present invention is further preferably subjected to preliminary polymerization in which the catalyst is contacted to an olefin to preliminarily carry out polymerization in some extent.


(ii) Sequential polymerization

It is required that the component (I) used for the present invention is produced by sequentially polymerizing the component (I-A) and the component (I-B).

Namely, in the present invention, the component (I) is required to be a block copolymer obtained by sequentially polymerizing the components having different ethylene contents in the first and second steps, respectively, in order that the fiber reinforced composition and the moulded article thereof of the present invention exhibit low shrinkage, referable grain transferability and flaw resistance, a smooth and soft tactile sensation without foaming and high impact strength.

It is also necessary, in order to prevent the problems such as adhesion of reaction products to reactors, that the component (I-A) is polymerized prior to polymerization of the component (I-B).

The sequential polymerization may be carried out by a batch or continuous manner and it is generally desirable that a continuous manner is used in view of productivity.

In the batch manner, the component (I-A) and the component (I-B) can be polymerized in a single reactor by changing the time as well as polymerization conditions. Multiple reactors may also be connected which are in parallel as far as the effect of the present invention is not deteriorated.

In the continuous manner, it is necessary to use two or more reactors connected in series because the component (I-A) and the component (I-B) are required to be polymerized separately. However, multiple reactors may be connected in series and/or in parallel for each of the component (I-A) and the component (I-B) as far as the effect of the present invention is not deteriorated.

(iii) Polymerization process

The component (I) can be obtained by any polymerization process such as a slurry method, bulk method and gas phase method. It is also possible to use a supercritical condition which is intermediate between the bulk method and the gas phase method and is included into the gas phase method with no distinction because such condition is substantially the same as the gas phase method.

Because the component (I-B) is freely soluble to an organic solvent such as hydrocarbons or liquid propylene, it is desirable that the component (I-B) is produced by the gas phase method.

The component (I-A) may be produced by any process without causing problems. However, when the component (I-A) having a relatively low crystallinity is produced, the gas phase method is preferable in order to prevent problems such as adhesion of products to reactors.

Thus, it is most desirable that, in the continuous manner, the component (I-A) is first polymerized by the bulk or gas phase method and the component (I-B) is subsequently polymerized by the gas phase method.

(iv) Other polymerization conditions

The polymerization temperature may be within the range that is generally used, without causing problems.

Specifically, the range of 0°C to 200°C and more preferably 40°C to 100°C may be used.

The optimal polymerization pressure may vary according to the process to be used, however, the pressure range that is generally used may be used without causing problems. Specifically, the range of higher than 0 MPa up to 200 MPa and more preferably 0.1 MPa to 50 MPa may be used as relative pressure to atmospheric pressure. Inert gas such as nitrogen may be simultaneously present.

When the sequential polymerization of the component (I-A) in the first step and the component (I-B) in the second step is carried out, it is desirable to add a polymerization retarder in the second step system. When a polymerization retarder is added to a reactor for ethylene-propylene random polymerization in the second step of production of the propylene-ethylene block copolymer, the quality of the product, the obtained powder or gel, such as the particle properties (such as flowability) may be improved. These procedures have been technically studied and may be exemplified by those disclosed in Japanese Patent Publication No. S63-54296, Japanese Patent Application Publication No. H7-25960, Japanese Patent Application Publication No. 2003-2939 and the like. It is also desirable to use these procedures in the present invention.

(3) Amount ratio

The amount of the component (I) used for the present invention is, relative to the total amount of the component (I) and the component (II) of 100% by weight, 40% by weight to 99% by weight, preferably 45% by weight to 95% by weight, still more preferably 48 to 90% by weight and particularly preferably 50% by weight to 85% by weight. When the amount of the component (I) is less than 40% by weight, the fiber reinforced composition and the moulded article thereof of the present invention may have deteriorated low shrinkage, grain transferability, flaw resistance, impact strength and moldability. When the amount is higher than 99% by weight, the rigidity and the like may be deteriorated.

2. Component (II): fiber (II)

The component (II) used for the present invention is at least one fiber (fibrous filler) selected from a glass fiber, a carbon fiber, a whisker and an organic fiber having a melting point of 245°C or more. The component (II) is characterized in that it contributes to improvements in low shrinkage, flaw resistance, physical properties such as rigidity, impact strength and heat resistance, dimension stability (reduction in linear expansion coefficient and the like) and environment adaptability of the fiber reinforced composition and the moulded article thereof of the present invention.

(1) Species, production

The component (II) is, as described above, at least one fiber selected from a glass fiber, a carbon fiber, a whisker and an organic fiber having a melting point of 245°C or more, and is preferably a glass fiber because of the degree of the effect of the present invention obtained, the ready production of the fiber reinforced composition of the present invention, the economic efficiency and the like.

The component (II) may be two or more species in combination in order to further improve the effect of the present invention, and can be a so-called master batch which is obtained by preliminarily adding the component (II) at a relatively high concentration to the component (I) and the like.

Various inorganic and organic fillers which do not correspond to the component (II), for example, glass beads, glass balloons, mica, organic fibers not corresponding to the component (II) may also be used in combination within the range that does not significantly deteriorate the effect of the present invention.

(i) Glass fiber

The glass fiber is not particularly limited, and the species of the glass used for the fiber may include, for example, E-glass, C-glass, A-glass, S-glass and the like, among which E-glass is preferred.

The glass fiber is produced by various well known methods without particular limitation.

The glass fiber has a fiber diameter of preferably 3 $\mu$m to 25 $\mu$m and more preferably 6 $\mu$m to 20 $\mu$m. The glass fiber preferably has a length of 2 mm to 20 mm. The fiber diameter and length are determined from the values measured by using a microscope or a calliper.

When the fiber diameter is less than 3 $\mu$m, the glass fiber may be easily fractured and damaged during production or moulding of the fiber reinforced composition and the moulded article thereof of the present invention, while when the fiber diameter is higher than 25 $\mu$m, the aspect ratio of the fiber is decreased, resulting in reduction in improvements of low shrinkage, flaw resistance, rigidity and impact strength of the fiber reinforced composition and the moulded article thereof of the present invention.

The fiber length is preferably 2 mm to 20 mm, although it may depend on the species of the glass fiber to be used. When the fiber length is less than 2 mm, the fiber reinforced composition and the moulded article thereof of the present invention may have deteriorated low shrinkage and physical properties such as rigidity and impact strength. When the fiber length is higher than 20 mm, grain transferability, tactile sensation and moldability (flowability) may be deteriorated. The fiber length in this context indicates the length of the glass fiber which is used as a raw material as such. However, this does not apply to "glass fiber containing pellets" which are the assembled and integrated multiple serial glass fibers obtained by melt-extrusion process as described hereinbelow, which may generally be in the form of roving. The glass fiber may be two or more species in combination.

The glass fiber may be subjected to surface treatment or not, and is preferably, in order to improve the dispersibility in the polypropylene resin, the one subjected to surface treatment with an organic silane coupling agent, a titanate coupling agent, an aluminate coupling agent, a zirconate coupling agent, a silicone compound, a higher fatty acid, a fatty acid metal salt, a fatty acid ester and the like.

The organic silane coupling agent used for the surface treatment may include, for example, vinyltrimethoxysilane, $\gamma$-chloropropyltrimethoxysilane, $\gamma$-methacryloxypropyltrimethoxysilane, $\gamma$-aminopropyltrimethoxysilane, 3-acryloxy-propyltrimethoxysilane and the like. The titanate coupling agent may include, for example, isopropyltriisostearoyl titanate, isopropyl tris(dioctylpyrophosphate) titanate, isopropyl tri(N-aminoethyl) titanate and the like. The aluminate coupling agent may include, for example, acetoalkoxyaluminium diisopropylate and the like. The zirconate coupling agent may include, for example, tetra(2,2-diallyloxymethyl)butyl, di(tridecyl)phosphite zirconate; neopentyl(diallyl)oxy, trineodecanoyl zirconate and the like. The silicone compound may include silicone oil, silicone resins and the like.

The higher fatty acid used for the surface treatment may include, for example, oleic acid, capric acid, lauric acid, palmitic acid, stearic acid, montanoic acid, caleic acid, linoleic acid, rosin acid, linolenic acid, undecanoic acid, undecenoic acid and the like. The higher fatty acid metal salt may include sodium, lithium, calcium, magnesium, zinc and aluminium salts of fatty acids having 9 or more carbon atoms such as stearic acid, montanoic acid and the like, among which calcium stearate, aluminium stearate, calcium montanate and sodium montanate are suitable. The fatty acid ester may be exemplified by polyalcohol fatty acid esters such as glycerol fatty acid esters, alpha-sulphone fatty acid esters, polyoxyethylene sorbitan fatty acid esters, sorbitan fatty acid esters, polyethylene fatty acid esters, sucrose fatty acid esters and the like.

The amount of the above agent for the surface treatment is not particularly limited and is preferably, relative to 100 parts by weight of glass fiber, 0.01 parts by weight to 5 parts by weight and more preferably 0.1 parts by weight to 3 parts by weight.

The glass fiber may be the one obtained after sizing (surface) treatment with a sizing agent. The sizing agent may include epoxy sizing agents, aromatic urethane sizing agents, aliphatic urethane sizing agents, acrylic sizing agents,

anhydrous maleic acid modified polyolefin sizing agents and the like.

**[0096]** The sizing agent preferably melts at 200°C or less because it is required that the sizing agent melts during melt-kneading with the polypropylene resin.

**[0097]** The glass fiber may be so-called glass fiber chopped strands which are obtained by cutting the fiber original yarn into a desired length. It is preferable to use glass fiber chopped strands in order to further improve the effect for improving low shrinkage, rigidity and impact strength of the fiber reinforced composition and the moulded article thereof of the present invention.

**[0098]** The glass fiber may be used as "glass fiber containing pellets" which are obtained by melt-extruding multiple glass fibers with, for example, an arbitrary amount of the component (I) and/or component (III) so as to obtain pellets of assembled and integrated serial glass fibers and which have the glass fiber length in the pellets that is substantially equal to the length of a side (in extrusion direction) of the pellets. This is more preferable because the fiber reinforced composition and the moulded article thereof of the present invention has further improved low shrinkage, flaw resistance and physical properties such as rigidity and impact strength. In this context, "substantially" specifically means that 50% or more and preferably 90% or more of total number of glass fibers in the glass fiber containing pellets have the length that is equal to the length (in extrusion direction) of the glass fiber containing pellets, so that the fibers are rarely fractured or damaged during preparation of the pellets.

**[0099]** The glass fiber containing pellets may be produced by any method without limitation. However, it is preferable that the pellets are produced by, for example, using a resin extruder, drawing multiple serial glass fibers from a fiber rack through a crosshead die while melt-extruding (impregnating) the fibers with an arbitrary amount of the molten component (I) and/or component (III) so as to assemble and integrate the multiple glass fibers (pultrusion moulding), because the fibers are rarely fractured or damaged.

**[0100]** The glass fiber containing pellet preferably has a length (in extrusion direction) of 2 mm to 20 mm, although it may depend on the used glass fiber. When the length is less than 2 mm, the fiber reinforced composition and the moulded article thereof of the present invention may have deteriorated low shrinkage, flaw resistance and physical properties such as rigidity and impact strength, while when the length is higher than 20 mm, grain transferability, tactile sensation and moldability (flowability) may be deteriorated.

**[0101]** The content of the glass fiber in the glass fiber containing pellets is preferably 20% by weight to 70% by weight relative to 100% by weight of the whole pellets.

**[0102]** When the content of the glass fiber is less than 20% by weight in the glass fiber containing pellets used in the present invention, the fiber reinforced composition and the moulded article thereof may have deteriorated low shrinkage, grain transferability and physical properties such as rigidity and impact strength, while when the content is 70% by weight or more, grain transferability, tactile sensation and moldability (flowability) may be deteriorated.

(ii) Carbon fiber

**[0103]** The carbon fiber is not particularly limited as to the dimensions and species thereof and can include a so-called fine carbon fiber having a fiber diameter of, for example, 500 nm or less. However, the fiber diameter is preferably 2 μm to 20 μm and more preferably 3 μm to 15 μm. When the fiber diameter is less than 2 μm, the carbon fiber may be easily fractured and damaged during production or moulding of the fiber reinforced composition and the moulded article thereof of the present invention, and thus may result in reduction in improvements of low shrinkage, flaw resistance and physical properties such as rigidity and impact strength of the fiber reinforced composition and the moulded article thereof of the present invention.

**[0104]** When the fiber diameter is higher than 20 μm, the aspect ratio of the fiber is decreased, resulting in reduction in improvements of low shrinkage, flaw resistance, rigidity and impact strength of the fiber reinforced composition and the moulded article thereof of the present invention.

**[0105]** The fiber diameter is measured according to a well known method which may include, for example, JIS R7607 (former JIS R7601) and microscopy.

**[0106]** The carbon fiber preferably has a fiber length of 1 mm to 20 mm and more preferably 3 mm to 10 mm.

**[0107]** The fiber length as used herein indicates the length of the carbon fiber which is used as a raw material as such. However, this does not apply to "carbon fiber containing pellets" which are the assembled and integrated multiple serial glass fibers obtained by melt-extrusion process as described hereinbelow, which may generally be in the form of roving.

**[0108]** When the fiber length is less than 1 mm, the final fiber length after production and moulding of the fiber reinforced composition and the moulded article thereof of the present invention is reduced, resulting in possible deterioration in low shrinkage and physical properties such as rigidity and impact strength of the fiber reinforced composition and the moulded article thereof. When the fiber length is higher than 20 mm, grain transferability, tactile sensation and moldability (flowability) may be deteriorated. The carbon fiber may be two or more species in combination.

**[0109]** The species of the carbon fiber is not limited as described above, and may include, for example, PAN (polyacrylonitrile) carbon fibers mainly produced from acrylonitriles, pitch carbon fibers mainly produced from tar pitch, rayon

carbon fibers and the like all of which may be suitably used. All of these are highly suitable for the present invention, however, in view of the composition purity and homogeneity thereof, PAN carbon fibers are preferable. These species may be used respectively alone or in combination. The carbon fiber may be produced by any production method without limitation.

Specific examples of the carbon fiber may include, for PAN carbon fibers, the carbon fibers with the trade name "PYROFIL" from Mitsubishi Rayon Co., Ltd., the trade name "TORAYCA" from Toray Industries, Inc., the trade name "Besfight" from Toho Tenax Co., Ltd. and the like, and for pitch carbon fibers, the carbon fibers with the trade name of "DIALEAD" from Mitsubishi Plastics, Inc., the trade name "DONACARBO" from Osaka Gas Chemicals Co., Ltd., the trade name "KRECA" from Kureha Corporation and the like.

Carbon fibers generally have a tensile elastic modulus of about 200 GPa to 1000 GPa and in the present invention, the carbon fiber preferably has a tensile elastic modulus of 200 GPa to 900 GPa and more preferably 200 GPa to 300 GPa in view of strength and economic efficiency of the resin composition and the moulded article thereof of the present invention.

Carbon fibers generally have a density of about 1.7 $g/cm^3$ to 5 $g/cm^3$, and the carbon fiber used for the present invention preferably has a density of 1.7 $g/cm^3$ to 2.5 $g/cm^3$ in view of light weight and economic efficiency.

The tensile elastic modulus and density are respectively measured according to well known methods which may include, for example, JIS R7606 (former JIS R7601) for the tensile elastic modulus and JIS R7603 (former JIS R7601) for the density.

The carbon fiber may be used as so-called chopped carbon fibers (strands) (hereinafter also merely referred to as CCF) which are obtained by cutting the fiber original yarn into a desired length. Alternatively, the carbon fiber may be the one obtained after sizing treatment with a sizing agent. In the present invention, CCF is preferably used in order to further improve the effect for improving low shrinkage, flaw resistance and physical properties such as rigidity and impact strength of the fiber reinforced composition and the moulded article thereof of the present invention.

Specific examples of CCF may include, for PAN carbon fibers, the carbon fibers with the trade name "PYROFIL Chopped" from Mitsubishi Rayon Co., Ltd., the trade name "TORAYCA Chopped" from Toray Industries, Inc., the trade name "Besfight Chopped" from Toho Tenax Co., Ltd. and the like, and for pitch carbon fibers, the carbon fibers with the trade name "DIALEAD Chopped Fiber" from Mitsubishi Plastics, Inc. , the trade name "DONACARBO Chopped" from Osaka Gas Chemicals Co., Ltd., the trade name "KRECA Chopped" from Kureha Corporation and the like.

It is more preferable that the carbon fiber is used as "carbon fiber containing pellets" which are obtained by melt-extruding multiple carbon fibers with an arbitrary amount of the component (I) and/or component (III) so as to obtain pellets of assembled and integrated serial carbon fibers and which have the carbon fiber length in the pellets that is substantially equal to the length of a side (in extrusion direction) of the pellets, in order to further improve low shrinkage, grain transferability and physical properties such as rigidity and impact strength of the fiber reinforced composition and the moulded article thereof of the present invention. In this context, "substantially" specifically means that 50% or more and preferably 90% or more of total number of carbon fibers in the carbon fiber containing pellets have the length that is equal to the length (in extrusion direction) of the carbon fiber containing pellets, so that the fibers are rarely fractured or damaged during preparation of the pellets. The carbon fiber containing pellets may be produced by any method without limitation. However, it is preferable that the pellets are produced by, for example, using a resin extruder, drawing multiple serial carbon fibers from a fiber rack through a crosshead die while melt-extruding (impregnating) the fibers with an arbitrary amount of the molten component (I) and/or component (III) so as to assemble and integrate the multiple carbon fibers (pultrusion moulding), because the fibers are rarely fractured or damaged.

The carbon fiber containing pellet preferably has a length (in extrusion direction) of 2 mm to 20 mm, although it may depend on the used carbon fiber. When the length is less than 2 mm, the fiber reinforced composition and the moulded article thereof of the present invention may have deteriorated low shrinkage, flaw resistance and physical properties such as rigidity and impact strength, while when the length is higher than 20 mm, grain transferability, tactile sensation and moldability (flowability) may be deteriorated.

The content of the carbon fiber in the carbon fiber containing pellets is preferably 20% by weight to 70% by weight relative to 100% by weight of the whole pellets.

When the content of the carbon fiber is less than 20% by weight in the carbon fiber containing pellets used in the present invention, the fiber reinforced composition and the moulded article thereof may have deteriorated low shrinkage, grain transferability and physical properties such as rigidity and impact strength, while when the content is 70% by weight or more, grain transferability, tactile sensation and moldability (flowability) may be deteriorated.

(iii) Whisker

The whisker is not particularly limited as to its species and specific examples thereof may include basic magnesium sulphate fibers (magnesium oxysulphate fibers), potassium titanate fibers, aluminium borate fibers, calcium silicate fibers, calcium carbonate fibers and the like, among which basic magnesium sulphate fibers (magnesium oxysulphate fibers), potassium titanate fibers and calcium carbonate fibers are preferred and basic magnesium sulphate fibers (magnesium oxysulphate fibers) are particularly preferred.

The fiber diameter of the whisker is not particularly limited and is preferably 1 μ or less. The fiber length is not particularly limited and is preferably 0.1 μm to 100 μm, more preferably 0.5 μm to 50 μm and particularly preferably 1 μm to 20 μm.

When the fiber diameter is higher than 1 μm, the aspect ratio of the fiber is decreased, resulting in reduction in improvements of low shrinkage, flaw resistance, rigidity and impact strength of the fiber reinforced composition and the moulded article thereof of the present invention. The fiber diameter is measured according to a well known method which may include, for example, microscopy. The whisker may be two or more species in combination.

The whisker may be produced by any well known production method without particular limitation. For example, the whisker may be produced by, when it is a basic magnesium sulphate fiber, hydrothermal synthesis using magnesium hydroxide and magnesium sulphate as raw materials.

Whiskers are generally in the form of fine powder in most cases, however, the whisker may be in the form of compressed bulk or granules or obtained after granulation for the purpose of improving the workability during mixing and the like.

The whisker may be subjected to surface treatment, in order to improve adhesiveness and dispersibility into the component (I) or the component (III), using various surface treatment agents such as organic titanate coupling agents, organic silane coupling agents, modified polyolefins grafting unsaturated carboxylic acids or anhydrides thereof, fatty acids, fatty acid metal salts and fatty acid esters.

(iv) Organic fiber having a melting point of 245°C or more

The organic fiber having a melting point of 245°C or more is not particularly limited as to the species and dimensions thereof. Specifically preferred are polyester fibers, polyamide fibers, polyphenylene sulphide fibers, aramid fibers and the like, among which polyester fibers and polyamide fibers are preferred. The polyester fibers may include polyethylene terephthalate (PET) fibers, polyethylene naphthalate (PEN) fibers and the like, and the polyamide fibers may include polyamide 66 fibers and the like.

The melting point is defined as a melting peak temperature of a DSC curve obtained according to JIS K7121. The organic fiber may be two or more species in combination, and may contain, relative to 100% by weight the fiber, less than 50% by weight of natural fibers such as cotton (cotton blend and the like).

The organic fiber may be produced by any well known production method without particular limitation.

The organic fiber has a single filament fineness of generally 1 dtex to 20 dtex and preferably 2 dtex to 15 dtex. The organic fiber has a total fineness of generally 150 dtex to 3000 dtex and preferably 250 dtex to 2000 dtex. The organic fiber has the filament number of generally 10 filaments to 1000 filaments and preferably 50 filaments to 500 filaments.

The fiber length is preferably 2 mm to 20 mm, although it may depend on the species of the glass fiber to be used. When the fiber length is less than 2 mm, the fiber reinforced composition and the moulded article thereof of the present invention may have deteriorated low shrinkage, flaw resistance and physical properties such as rigidity and impact strength. When the fiber length is higher than 20 mm, grain transferability, tactile sensation and moldability (flowability) may be deteriorated. The fiber length in this context indicates the length of the organic fiber which is used as a raw material as such. However, this does not apply to "organic fiber containing pellets" which are the assembled and integrated multiple serial organic fibers obtained by melt-extrusion process as described hereinbelow, which may generally be in the form of roving. The organic fiber may be two or more species in combination.

As described above, the organic fiber forms the fiber reinforced composition after melt-extrusion with the component (I) and the like. However, the organic fiber has a melting point of 245°C or more and the difference in melting properties (melting point (softening point)) from the component (I) and the like which have usually a melting point (softening point) of less than 170°C is sufficient. Thus during the melt-kneading which is usually at around 200°C, thermal deformation of the organic fiber is sufficiently prevented and the fibrous shape (aspect ratio) of the organic fiber is sufficiently maintained, resulting in exhibition of preferable low shrinkage, grain transferability, flaw resistance and physical properties such as rigidity and impact strength of the fiber reinforced composition and the moulded article thereof of the present invention.

It is more preferable that the organic fiber may be used as "organic fiber containing pellets" which are obtained by melt-extruding multiple organic fibers with an arbitrary amount of the component (I) and/or component (III) so as to obtain pellets of assembled and integrated serial organic fibers and which have the organic fiber length in the pellets that is substantially equal to the length of a side (in extrusion direction) of the pellets, in order to further improve low shrinkage, grain transferability, rigidity and impact strength of the fiber reinforced composition and the moulded article thereof of the present invention. In this context, "substantially" specifically means that 50% or more and preferably 90% or more of total number of organic fibers in the organic fiber containing pellets have the length that is equal to the length of the organic fiber containing pellets, so that the fibers are rarely fractured or damaged during preparation of the pellets.

The organic fiber containing pellets may be produced by any method without limitation. However, it is preferable that the pellets are produced by, for example, using a resin extruder, drawing multiple serial organic fibers from a fiber rack through a crosshead die while melt-extruding (impregnating) the fibers with an arbitrary amount of the molten component (I) and/or component (III) so as to assemble and integrate the multiple organic fibers (pultrusion moulding), because the fibers are rarely fractured or damaged.

The organic fiber containing pellet preferably has a length of 2 mm to 20 mm, although it may depend on the used organic fiber. When the length is less than 2 mm, the fiber reinforced composition and the moulded article thereof of the present invention may have decreased improvements in low shrinkage, flaw resistance, rigidity and impact strength, while when the length is higher than 20 mm, grain transferability, tactile sensation and moldability (flowability) may be deteriorated.

The content of the organic fiber in the organic fiber containing pellets is preferably 20 to 70% by weight relative to 100% by weight of the whole pellets.

When the content of the organic fiber is less than 20% by weight in the organic fiber containing pellets used in the present invention, the fiber reinforced composition and the moulded article thereof of the present invention may have deteriorated low shrinkage, flaw resistance and physical properties such as rigidity and impact strength, while when the content exceeds 70% by weight, grain transferability, tactile sensation and moldability (flowability) may be deteriorated.

(2) Amount ratio

The amount of the component (II) used for the present invention is, in the total amount of the component (I) and the component (II) of 100% by weight, 1% by weight to 60% by weight, preferably 5% by weight to 55% by weight, more preferably 10% by weight to 52% by weight and still more preferably 15 to 50% by weight. When the amount of the component (II) is less than 1% by weight, the fiber reinforced composition and the moulded article thereof of the present invention may have deteriorated low shrinkage, flaw resistance and physical properties such as rigidity and impact strength. When the content is higher than 60% by weight, grain transferability, tactile sensation and moldability may be deteriorated.

The amount of the component (II) is the actual amount and when the glass fiber containing pellets are used for example, the net actual content of the component (II) in the pellets is calculated.

3. Component (III): Modified polyolefin (III)

The component (III) used for the present invention is an acid modified polyolefin and/or a hydroxy modified polyolefin and is characterized in that it further effectively confers functions such as low shrinkage, flaw resistance, a smooth tactile sensation and physical properties such as rigidity and impact strength on the fiber reinforced composition and the moulded article thereof of the present invention.

(1) Species, Production

The acid modified polyolefin as the component (III) is not particularly limited and may be any conventional well known acid modified polyolefins.

The acid modified polyolefin is the one obtained by graft copolymerization of polyolefins such as polyethylenes, polypropylenes, ethylene-$\alpha$-olefin copolymers, ethylene-$\alpha$-olefin-unconjugated diene compound copolymers (EPDM and the like), ethylene-aromatic monovinyl compound-conjugated diene compound copolymerized rubbers and the like with unsaturated carboxylic acids such as maleic acid or maleic anhydride so as to effect modification. The graft copolymerization may be carried out by, for example, reaction of the polyolefin in a suitable solvent with the unsaturated carboxylic acid in the presence of a radical generating agent such as benzoyl peroxide. The component such as the unsaturated carboxylic acid and a derivative thereof may also be introduced in the polymer chain by random or block copolymerization using a monomer for the polyolefin.

The unsaturated carboxylic acid used for modification may include, for example, compounds having a polymerizable double bond and containing a carboxyl group and optionally a functional group including hydroxyl and amino groups such as maleic acid, fumaric acid, itaconic acid and methacrylic acid.

The derivative of the unsaturated carboxylic acid may include acid anhydrides, esters, amides, imides and metal salts thereof which may specifically include maleic anhydride, itaconic anhydride , methyl acrylate, ethyl acrylate, butyl acrylate, methyl methacrylate, ethyl methacrylate, maleic acid monoethyl ester, maleic acid diethyl ester, fumaric acid monomethyl ester, fumaric acid dimethyl ester, acrylamide, methacrylamide, maleic acid monoamide, maleic acid diamide, fumaric acid monoamide, maleimide, N-butylmaleimide, sodium methacrylate and the like. Maleic anhydride is preferred.

The graft reaction may be carried out, for example, by using an organic peroxide such as dialkyl peroxides including di-t-butyl peroxide, t-butyl cumyl peroxide, dicumyl peroxide, 2,5-dimethyl-2,5-di(t-butylperoxy)hexane, 2,5-dimethyl-2,5-di(t-butylperoxy)hexyne-3 and the like; peroxy esters including t-butyl peroxyacetate, t-butyl peroxybenzoate, t-butyl peroxyisopropylcarbonate, 2,5-dimethyl-2,5-di(benzoylperoxy)hexane, 2,5-dimethyl-2,5-di(benzoylperoxy)hexyne-3 and the like; diacyl peroxides including benzoyl peroxide and the like; hydroperoxides such as diisopropylbenzene hydroperoxide, 2,5-dimethyl-2,5-di(hydroperoxy)hexane and the like at about 0.001 to 10 parts by weight relative to 100 parts by weight of the polyolefin and at a temperature of about 80 to 300°C in melting or solution.

The degree of acid modification (which may also be referred to as grafting percentage) of the acid modified polyolefin is not particularly limited and is preferably, in terms of maleic anhydride, 0.05 to 10% by weight and more preferably 0.07 to 5% by weight.

The preferable acid modified polyolefin may include maleic anhydride modified polypropylenes in view of the increased effect of the present invention.

The hydroxy modified polyolefin is a modified polyolefin containing a hydroxyl group. The modified polyolefin may contain the hydroxyl group at any position, for example at the terminal (s) of a main chain or in a side chain.

The olefin resin included in the hydroxy modified polyolefin may be exemplified by, for example, homopolymers or copolymers of an α-olefin such as ethylene, propylene, butene, 4-methylpentene-1, hexene, octene, nonene, decene, dodecene and the like and copolymers of the α-olefin and a copolymerizable monomer.

Preferred hydroxy modified polyolefin may be exemplified by hydroxy modified polyethylenes (such as low, medium or high density polyethylenes, linear low density polyethylenes, ultra high molecular weight polyethylenes, ethylene-(meth)acrylic ester copolymers and ethylene-vinyl acetate copolymers), hydroxy modified polypropylenes (such as polypropylene homopolymers including isotactic polypropylenes, random copolymers of propylene and an α-olefin (for example, ethylene, butene and hexane), propylene-α-olefin block copolymers), hydroxy modified poly(4-methylpentene-1) and the like. The monomer used for introducing the reactive group may be exemplified by, for example, monomers having a hydroxyl group (for example, allyl alcohol, 2-hydroxyethyl (meth)acrylate, 2-hydroxypropyl (meth)acrylate and the like).

The degree of modification with the monomer containing a hydroxyl group is, relative to the olefin resin, 0.1 to 20% by weight and preferably 0.5 to 10% by weight. The average molecular weight of the hydroxy modified polyolefin is not particularly limited. The hydroxy modified polyolefin can be obtained by, when it has a low molecular weight, polymerizing a conjugated diene monomer with a well known method such as anion polymerization, hydrolyzing the product and hydrogenating the obtained polymer.

The component (III) may be two or more species used in combination.

(2) Amount ratio

The amount of the component (III) used for the present invention is, relative to the total amount of (I) and (II) of 100 parts by weight, 0 to 10 parts by weight, preferably 0.01 to 7 parts by weight, more preferably 0.5 to 5 parts by weight, still more preferably 1 to 3 parts by weight and particularly preferably 1 to 2 parts by weight. When the amount of the component (III) is higher than 10 parts by weight, the fiber reinforced composition and the moulded article thereof of the present invention may have a deteriorated tactile sensation, impact strength and economic efficiency.

4. Component (IV): Thermoplastic elastomer (IV)

The component (IV) used for the present invention is a thermoplastic elastomer satisfying the following requirements (IV-i) and (IV-ii), is selected from olefin elastomers and styrene elastomers and is characterized in that it confers functions such as low shrinkage, a soft tactile sensation and high impact strength on the fiber reinforced composition and the moulded article thereof of the present invention.

(IV-i) : the component (IV) has a density of 0.86 g/cm$^3$ to 0.92 g/cm$^3$.
(IV-ii): the component (IV) has a MFR (230°C, 2.16 kg load) of 0.5 g/10 min to 100 g/10 min.

(1) Requirements

(IV-i)

The component (IV) used for the present invention has a density within the range of 0.86 g/cm$^3$ to 0.92 g/cm$^3$, preferably 0.86 g/cm$^3$ to 0.90 g/cm$^3$ and still more preferably 0.86 g/cm$^3$ to 0.875 g/cm$^3$.

When the density is less than 0.86 g/cm$^3$, the fiber reinforced composition and the moulded article thereof of the present invention may have deteriorated grain transferability and flaw resistance, and when the density is higher than 0.92 g/cm$^3$, low shrinkage, tactile sensation and impact strength may be deteriorated.

(IV-ii)

The component (IV) has a MFR (230°C, 2.16 kg load) in the range of 0.5 g/10 min to 100 g/10 min, preferably 1.5 g/10 min to 50 g/10 min and still more preferably 2 g/10 min to 15 g/10 min. When MFR is less than 0.5 g/10 min, the fiber reinforced composition and the moulded article thereof of the present invention may have deteriorated low shrinkage, grain transferability, tactile sensation and moldability (flowability), and when MFR is higher than 100 g/10 min, flaw resistance and impact strength may be deteriorated.

(2) Species

The component (IV) used for the present invention may be an olefin elastomer or a styrene elastomer. The olefin elastomer may include, for example, ethylene-α-olefin copolymer elastomers such as ethylene-propylene copolymer elastomers (EPR), ethylene-butene copolymer elastomers (EBR), ethylene-hexene copolymer elastomers (EHR) and ethylene-octene copolymer elastomers (EOR); ethylene-α-olefin-diene ternary copolymer elastomers such as ethylene-propylene-ethylidene norbornene copolymers, ethylene-propylene-butadiene copolymers and ethylene-propylene-isoprene copolymers.

The styrene elastomer may include, for example, styrene-butadiene-styrene triblock copolymer elastomers (SBS), styrene-isoprene-styrene triblock copolymer elastomers (SIS), styrene-ethylene-butylene copolymer elastomer (SEB), styrene-ethylene-propylene copolymer elastomers (SEP), styrene-ethylene-butylene-styrene copolymer elastomers (SEBS), styrene-ethylene-butylene-ethylene copolymer elastomers (SEBC), hydrogenated styrene-butadiene elastomers (HSBR), styrene-ethylene-propylene-styrene copolymer elastomers (SEPS), styrene-ethylene-ethylene-propylene-styrene copolymer elastomers (SEEPS), styrene-butadiene-butylene-styrene copolymer elastomers (SBBS) and the like. The styrene elastomer may further include hydrogenated polymeric elastomers such as ethylene-ethylene-butylene-ethylene copolymer elastomers (CEBC).

Among others, ethylene-octene copolymer elastomers (EOR) and/or ethylene-butene copolymer elastomers (EBR) is preferably used because of the tendency that the fiber reinforced composition and the moulded article thereof of the present invention may have further improved low shrinkage, tactile sensation and impact strength as well as excellent economic efficiency. The component (IV) may be two or more species used in combination.

(3) Production method

The component (IV) used for the present invention which is, for example, an olefin elastomer such as ethylene-α-olefin copolymer elastomers or ethylene-α-olefin-diene ternary copolymer elastomers, is produced by polymerizing the monomers in the presence of a catalyst. The catalyst may be, for example, a titanium compound such as a halogenated titanium, an organic aluminium-magnesium complex such as an alkylaluminium-magnesium complex, a so-called Ziegler catalyst such as alkylaluminium or alkylaluminium chloride, a metallocene compound catalyst disclosed in WO 91/04257 and the like.

Polymerization may be carried out according to such a production process as the gas phase fluidized bed method, the solution method, the slurry method and the like. Among the component (IV), the styrene elastomer can be produced by a usual anion polymerization method and polymer hydrogenation technique.

(4) Amount ratio

The amount of the component (IV) used for the present invention is, relative to the total amount of (I) and (II) of 100 parts by weight, 0 to 30 parts by weight, preferably 5 to 23 parts by weight and more preferably 10 to 18 parts by weight. When the amount of the component (IV) is higher than 40 parts by weight, the fiber reinforced composition and the moulded article thereof of the present invention may have deteriorated heat resistance (heat distortion temperature) or deteriorated flaw resistance.

5. Component (V): Propylene polymer resin (V)

The component (V) used for the present invention is a propylene polymer resin that is other than the propylene-ethylene block copolymer (I) and satisfies the requirement (V-i), and is characterized in that it confers functions such as tactile sensation, balanced physical properties, moldability (flowability) and heat resistance on the fiber reinforced composition and the moulded article thereof of the present invention.

(V-i): the component (V) has a MFR (230°C, 2.16 kg load) of 0.5 g/10 min to 300 g/10 min.

(1) Requirement

(V-i)

The component (V) used for the present invention is required to have, as described above, a MFR (230°C, 2.16 kg load) in the range of 0.5 g/10 min to 300 g/10 min, preferably 5 g/10 min to 250 g/10 min and still more preferably 10 g/10 min to 200 g/10 min. When the MFR is less than 0.5 g/10 min, the fiber reinforced composition and the moulded article thereof of the present invention may have deteriorated low shrinkage, grain transferability, tactile sensation and moldability (flowability).

When the MFR is higher than 300 g/10 min, impact strength may be deteriorated. The MFR can be adjusted by using an agent for decreasing the molecular weight. The component (V) may be two or more species used in combination.

(2) Species

The component (V) used for the present invention is not particularly limited as to the species thereof and may be a well known propylene polymer resin. For example, a propylene homopolymer resin, copolymer resins of propylene and an α-olefin such as propylene-ethylene random copolymer resins and propylene-ethylene block copolymer resins (provided that these resins do not correspond to the component (I) as described above). copolymer resins of propylene and a vinyl compound, copolymer resins of propylene and vinyl ester, copolymer resins of propylene and an unsaturated organic acid or a derivative thereof, copolymer resins of propylene and a conjugated diene, copolymer resins of propylene and an unconjugated polyene and mixtures thereof may be mentioned.

Among these, in view of low shrinkage, grain transferability, flaw resistance and highly balanced physical properties (between impact strength and rigidity) of the fiber reinforced composition and the moulded article thereof of the present invention, a propylene homopolymer resin or a propylene-ethylene block copolymer resin (which does not correspond to the component (I)) is preferred and a propylene-ethylene block copolymer resin (which does not correspond to the component (I)) is more preferred.

When the component (V) is the propylene-ethylene block copolymer resin, it is preferable that the resin satisfies the following requirement (V-ii).

The propylene-ethylene block copolymer resin comprising a propylene homopolymer moiety at 30% by weight to 80% by weight, preferably 40% by weight to 60% by weight and still more preferably 42% by weight to 55% by weight and an ethylene-propylene copolymer moiety at 20% by weight to 70% by weight, preferably 40% by weight to 60% by weight and still more preferably 45% by weight to 58% by weight (provided that the total amount of the propylene homopolymer moiety and the ethylene-propylene copolymer moiety is 100% by weight), wherein the ethylene-propylene copolymer moiety has an ethylene content of 20% by weight to 60% by weight, preferably 25% by weight to 55% by weight and still more preferably 30% by weight to 50% by weight is preferable in view of improving tactile sensation, balances between physical properties and moldability (flowability) of the fiber reinforced composition and the moulded article thereof of the present invention (requirement (V-ii)).

When the component (V) is for example the propylene-ethylene block copolymer resin, it is preferable that the ratio [(Mw-H)/(Mw-W)] between the weight average molecular weight of the propylene homopolymer moiety (Mw-H) and the weight average molecular weight of the whole propylene polymer resin (Mw-W) is generally less than 0.9, preferably less than 0.8 and still more preferably less than 0.7 in view of further improving tactile sensation, balanced physical properties and moldability of the fiber reinforced composition and the moulded article thereof of the present invention.

In the present invention, the weight average molecular weight of the whole propylene polymer resin (Mw-W) and the weight average molecular weight of the propylene homopolymer moiety (Mw-H) are determined according to the method described in Examples.

(3) Production method

The component (V) used for the present invention may be produced by any production method that allows production of the component (V) defined in the present application without particular limitation and may be produced by the following method. (i) Polymerization reactor

The polymerization reactor is not particularly limited as to the shape or structure thereof and may include a vessel with an agitator and a tube-shaped reactor which may be generally used for slurry polymerization and bulk polymerization, a fluidized bed reactor which may be generally used for gas phase polymerization, a horizontal reactor with an agitating blade and the like.

(ii) Polymerization catalyst

The total amount of the polymerization catalyst is preferably present at the initiation of polymerization so as to be involved in polymerization from the beginning of polymerization, and it is preferable that no fresh catalyst is added after initiation of the polymerization. Accordingly, deterioration in powder quality and generation of gel can be suppressed.

The polymerization catalyst is not particularly limited as to the species thereof and may be a well known catalyst which may include, for example, a so-called Ziegler-Natta catalyst containing a titanium compound and an organic aluminium in combination and a metallocene catalyst (for example, disclosed in Japanese Patent Application Publication No. H5-295022).

A catalytic promoter such as an organic aluminium compound may be used.

The catalyst may be added with various polymerization additives in order to improve stereoregularity, control particle properties, control a soluble component and control molecular weight distribution. The additives may include, for example, organic silicon compounds such as diphenyldimethoxysilane and tert-butyl methyldimethoxysilane, ethyl acetate, butyl benzoate and the like.

(iii) Polymerization manner and polymerization solvent

For implementing polymerization, it is possible to use slurry polymerization which uses an inert hydrocarbon such as hexane, heptane, octane, benzene or toluene as a polymerization solvent, bulk polymerization which uses propylene as such as a polymerization solvent or gas phase polymerization in which the raw material propylene is polymerized in gas phase. These polymerization manners may be used in combination.

When the component (V) is the propylene-ethylene block copolymer resin, the propylene homopolymer moiety may be polymerized by bulk polymerization and the ethylene-propylene copolymer moiety may be polymerized by gas phase polymerization, or the propylene homopolymer moiety may be polymerized by bulk polymerization followed by gas phase polymerization and the ethylene-propylene copolymer moiety may be polymerized by gas phase polymerization.

(iv) Polymerization pressure

The polymerization pressure during polymerization of the component (V) of the present invention is not particularly limited and may be constant or variously altered. It is generally preferable to carry out polymerization at 0.1 MPa to 5 MPa, preferably about 0.3 MPa to 2 MPa, as relative pressure to atmospheric pressure.

(v) Polymerization temperature

The polymerization temperature of the component (V) in the present invention is not particularly limited and generally is selected from the range of 20°C to 100°C and preferably 40°C to 80°C. The polymerization temperature may be the same or different at initiation and termination of polymerization.

(vi) Polymerization period

The polymerization period of the component (V) in the present invention is not particularly limited and may be usually 30 minutes to 10 hours. When the component (V) is the propylene-ethylene block copolymer resin, the propylene homopolymer moiety may be produced by, in standard, gas phase polymerization for 2 hours to 5 hours, bulk polymerization for 30 minutes to 2 hours, slurry polymerization for 4 hours to 8 hours and the ethylene-propylene copolymer moiety may be produced by, in standard, gas phase polymerization for 1 hour to 3 hours, bulk polymerization for 20 minutes to 1 hour, slurry polymerization for 1 hour to 3 hours.

When the component (V) is the propylene-ethylene block copolymer resin, the propylene homopolymer moiety is preferably a propylene homopolymer in view of high rigidity of the fiber reinforced composition and the moulded article thereof of the present invention. However, it may be a copolymer of propylene and a small amount of a comonomer in view of further improvement in tactile sensation, flaw resistance and moldability (flowability).

The copolymer resin may specifically comprise, for example, a comonomer unit corresponding to one or more comonomer selected from the group consisting of $\alpha$-olefins other than propylene such as ethylene, 1-butene, 1-pentene, 1-hexene, 3-methyl-1-butene, 4-methyl-1-pentene and the like and vinyl compounds such as styrene, vinylcyclopentene, vinylcyclohexane and vinylnorbornane at a content of 5% by weight or less preferably. The comonomer may be two or more species which are copolymerized. The comonomer is preferably ethylene and/or 1-butene and the most preferably ethylene.

The content of the comonomer unit is determined by infrared spectroscopic analysis (IR).

Polymerization of the propylene homopolymer moiety is generally followed by polymerization of the ethylene-propylene copolymer moiety.

(4) Amount ratio

The amount of the component (V) is, relative to the total amount of (I) and (II) of 100 parts by weight, 0 to 50 parts by weight, preferably 1 to 40 parts by weight, more preferably 3 to 30 parts by weight and particularly preferably 5 to 25 parts by weight. When the amount of the component (V) is higher than 50 parts by weight, the fiber reinforced composition and the moulded article thereof of the present invention may have deteriorated grain transferability, flaw resistance and tactile sensation. When it is particularly desired to confer heat resistance on the resin composition of the present invention, it is preferable to add the component (V) at 5 parts by weight or more.

6. Component (VI): Fatty acid amide (VI)

The component (VI) used for the present invention satisfies the following requirement (VI-i) and is characterized in that it confers functions such as flaw resistance, tactile sensation and moldability on the fiber reinforced composition and the moulded article thereof of the present invention.
(VI-i) : the component (VI) is a fatty acid amide represented by the following formula (A):

$$RCONH_2 \qquad \text{Formula (A)}$$

[wherein in the formula (1), R is a linear aliphatic hydrocarbon group having 10 to 25 carbon atoms].

(1) Requirement

(VI-i)

The component (VI) used for the present invention is a fatty acid amide represented by the following formula (A):

$$RCONH_2 \qquad \text{Formula (A)}$$

[wherein in the formula (A), R is a linear aliphatic hydrocarbon group having 10 to 25 carbon atoms].
The component (VI) is specifically exemplified by, for example, saturated fatty acid amides such as lauric acid amide, myristic acid amide, palmitic acid amide, stearic acid amide and behenic acid amide and unsaturated fatty acid amides such as oleic acid amide, linoleic acid amide, linolenic acid amide, erucic acid amide, arachidonic acid amide, eicosapentaenoic acid amide and docosahexaenoic acid amide.
Among these, unsaturated fatty acid amides are preferred and inter alia monounsaturated fatty acid amides such as erucic acid amide and oleic acid amide are more preferred.
The component (VI) is characterized in that it contributes to improvement in flaw resistance, a smooth tactile sensation, moldability and the like by reducing the surface friction and the like in the fiber reinforced composition and the moulded article thereof of the present invention.
The component (VI) also exhibits the ability in the moulded article of the present invention for reducing whitening scratches which may be generated due to contact and collision to external objects during moulding, distribution and use thereof. The component (VI) may be two or more species in combination.

(2) Amount ratio

The amount of the component (VI) used for the present invention is, relative to the total amount of (I) and (II) of 100 parts by weight, 0 to 3 parts by weight, preferably 0.01 to 2 parts by weight, more preferably 0.05 to 1 part by weight and particularly preferably 0.1 to 0.5 parts by weight. When the amount of the component (VI) is higher than 3 parts by weight, the fiber reinforced composition and the moulded article thereof of the present invention may have deteriorated grain transferability, rigidity and economic efficiency.

7. Optional component (VII)

In the present invention, if necessary, ordinary optional component (VII) can be further added other than the component (I) to the component (VI) within the range that does not significantly deteriorate the effect of the present invention in order to, for example, further improve the effect of the invention or confer different effects.

Specifically, mention may be made to an agent for decreasing the molecular weight such as peroxides; a colorant such as pigments; an antioxidant such as phenol, phosphorus and sulphur compounds; a light stabilizer such as hindered amine compounds; an ultraviolet absorbing agent such as benzotriazol compounds; a nucleating agent such as sorbitol compounds; an antistatic agent such as nonionic compounds; a dispersant such as organic metal salts; a metal deactivator such as nitrogen compounds; a flame retardant such as halogen compounds; an antibacterial/antifungal agent such as thiazole compounds; a plasticizer; a neutralizing agent; a thermoplastic resin such as polyolefin resins other than the component (I), the component (V) or the component (III), polyamide resins and polyester resins; a filler other than the component (II) such as talc; an elastomer (rubber component) other than the component (IV); a lubricant other than the component (VI) and the like.

The optional component may be two or more species in combination and may be added to the composition or to each of the component (I) to the component (VI), and the optional component added to each component may be two or more species in combination. In the present invention, the amount of the optional component (VII) is not particularly limited and is usually about 0 to 0.8 parts by weight relative to the total amount of the component (I) and the component (II) of 100 parts by weight.

(1) Species

The agent for decreasing the molecular weight may be, for example, various organic peroxides or so-called decomposition (oxidation) accelerators, among which organic peroxides are suitable.

Specific organic peroxides may include one or more selected from the group of benzoyl peroxide, t-butyl perbenzoate, t-butyl peracetate, t-butylperoxy isopropyl carbonate, 2,5-di-methyl-2,5-di-(benzoylperoxy)hexane, 2,5-di-methyl-2,5-di-(benzoylperoxy)hexyne-3, t-butyl-di-peradipate, t-butyl peroxy-3,5,5-trimethylhexanoate, methyl ethyl ketone peroxide, cyclohexanone peroxide, di-t-butyl peroxide, dicumyl peroxide, 2,5-di-methyl-2,5-di-(t-butylperoxy)hexane, 2,5-di-methyl-2,5-di-(t-butylperoxy)hexyne-3, 1,3-bis-(t-butylperoxyisopropyl)benzene, t-butylcumyl peroxide, 1,1-bis-(t-butylperoxy)-3,3,5-trimethylcyclohexane, 1,1-bis-(t-butylperoxy)cyclohexane, 2,2-bis-t-butylperoxybutane, p-menthane hydroperoxide, di-isopropylbenzene hydroperoxide, cumene hydroperoxide, t-butyl hydroperoxide, p-cymene hydroperoxide, 1,1,3,3-tetra-methylbutyl hydroperoxide and 2,5-di-methyl-2,5-di-(hydroperoxy)hexane. However, the organic peroxide is not limited to the above.

The colorant such as inorganic or organic pigments is effective for conferring and improving colour appearance, flaw resistance, visual appearance, texture, product quality, weather resistance and durability of the fiber reinforced composition and the moulded article thereof of the present invention.

Specific examples of inorganic pigments which may be contained include carbon black such as furnace black and ketjen carbon; titanium oxides; iron oxides (such as colcothar); chromic acids (such as chrome yellow); molybdenum acids; selenium sulphides; ferrocyanides and the like and organic pigments which may be contained include azo pigments such as slightly soluble azo lakes, soluble azo lakes, insoluble azo chelates, condensation azo chelates and other azo chelates; phthalocyanine pigments such as phthalocyanine blue and phthalocyanine green; threne pigments such as anthraquinone, perynone, perylene and thioindigo; lake dyes; quinacridone dyes; dioxadine dyes; isoindolinone dyes and the like. Aluminium flakes or pearl pigments may be added in order to confer metallic or pearl appearance. Dyes may also be added.

The light stabilizer and the ultraviolet absorbing agent such as hindered amine compounds, benzotriazol compounds, benzophenone compounds and salicylate compounds are effective for conferring and improving weather resistance and durability of the fiber reinforced composition and the moulded article thereof of the present invention.

Specific examples of hindered amine compounds may include a condensation product of dimethyl succinate and 1-(2-hydroxyethyl)-4-hydroxy-2,2,6,6-tetramethyl piperidine; poly[[6-(1,1,3,3-tetramethylbutyl)imino-1,3,5-triazin-2,4-diyl ][(2,2,6,6-tetramethyl-4-piperidyl)imino]hexamethylene [(2,2,6,6-tetramethyl-4-piperidyl)imino]]; tetrakis(2,2,6,6-tetramethyl-4-piperidyl)1,2,3,4-butane tetracarboxylate; tetrakis(1,2,2,6,6-pentamethyl-4-piperidyl)1,2,3,4-butane tetracarboxylate; bis(1,2,2,6,6-pentamethyl-4-piperidyl)sebacate; bis-2,2,6,6-tetramethyl-4-piperidyl sebacate and the like, benzotriazol compounds may include 2-(2'-hydroxy-3',5'-di-t-butylphenyl)-5-chlorobenzotriazole; 2-(2'-hydroxy-3'-t-butyl-5'-methylphenyl)-5-chlorobenzotriazol e and the like, benzophenone compounds may include 2-hydroxy-4-methoxybenzophenone; 2-hydroxy-4-n-octoxybenzophenone and the like and salicylate compounds may include 4-t-butylphenyl salicylate; 2,4-di-t-butylpehnyl 3',5'-di-t-butyl-4'-hydroxybenzoate and the like.

It is preferable to use the light stabilizer and the ultraviolet absorbing agent in combination because the effect for improving weather resistance and durability is enhanced.

The antioxidant such as phenol, phosphorus and sulphur antioxidants is effective for conferring and improving thermal stability, process stability and thermal aging resistance of the fiber reinforced composition and the moulded article thereof.

The antistatic agent such as nonionic and cationic antistatic agents are effective for conferring and improving antistatic property of the fiber reinforced composition and the moulded article thereof.

II. Production method of fiber reinforced polypropylene resin composition, and production method and application of moulded article

1. Production method of fiber reinforced polypropylene resin composition

The fiber reinforced composition of the present invention can be produced by blending, according to a well known method, the component (I) and the component (II), or the component (I) and the component (II) as well as the optional component corresponding to at least one selected from the component (III) the component (IV), the component (V) and the component (VI) and further optionally the optional component at the ratios described above and undergoing a kneading step wherein these components are melt-kneaded.

Mixing is usually carried out on a mixer such as a tumbler, a V blender and a ribbon blender. Melt-kneading is usually carried out on a kneading device such as a single-screw extruder, a twin-screw extruder, a Banbury mixer, a roll mixer, a brabender plastograph, a kneader and an agitation granulator, so that (semi) melt-kneading and granulation are carried out. When (semi) melt-kneading and granulation are carried out, the above components may be kneaded simultaneously or each component is separately kneaded in order to improve the properties. Namely, for example, some or all of the component (I) and some or all of the component (II) may be kneaded prior to kneading and granulating remaining components.

The fiber reinforced composition of the present invention is preferably produced by a combining method so that the average length of the component (II) (except for the whisker) is 0.3 mm or more, preferably 0.4 mm or more and 2.5 mm or less in the resin composition pellets or the moulded article obtained after the kneading step wherein melt-kneading is carried out.

As used herein, the average length of the component (II) in the resin composition pellets or in the moulded article means the value obtained by averaging the values measured on a digital microscope. Specific measurement is carried out by, when the component (II) is the glass fiber, burning the resin composition pellets or the moulded article of the present invention, mixing the ash of the glass fiber with water containing a surfactant, dropping and spreading the mixed aqueous liquid on a thin glass plate, measuring the glass fiber length on a digital microscope (Type VHX-900 from Keyence Corporation) and calculating the average.

A preferable production method may include, for example during melt-kneading on a twin-screw extruder, sufficiently melt-kneading the component (I), the component (III), the component (IV) and the component (V) prior to feed the component (II) according to a side feed method and dispersing the sized fibers while minimizing fracture and damage to the fibers.

Another preferred production method may include a so-called agitation granulation in which, for example, the component (I) to the component (V) are agitated at high speed in a Henschel mixer to obtain semi-molten state while the component (II) in the mixture is kneaded, because this method allows easy dispersion of the fibers while minimizing fracture and damage to the fibers.

Another preferred production method may include a method in which the component (I) to the component (V) other than the component (II) are melt-kneaded in an extruder to obtain pellets which are then mixed with the above so-called "fiber (component (II)) containing pellets" such as the glass fiber containing pellets or the carbon fiber containing pellets to produce the fiber reinforced composition, because of the same reason as described above.

As described above, a preferable method for producing the fiber reinforced composition of the present invention may include a method in which, in the kneading step, the components other than the component (II) are kneaded prior to addition of the component (II). Accordingly, the fiber reinforced composition of the present invention can be produced by a simple production method.

2. Production method and application of moulded article

The moulded article of the present invention can be obtained by moulding the fiber reinforced composition obtained by the above method according to a well known moulding method such as injection moulding (including gas injection moulding, dual colour injection moulding, core-back injection moulding and sandwich injection moulding), injection compression moulding (press injection), extrusion moulding, sheet moulding and blow moulding. Among these, injection moulding or injection compression moulding is preferred.

The moulded article of the present invention has low shrinkage and preferable grain transferability, flaw resistance and moulded appearance, which properties are exhibited regardless of the presence or absence of foaming. The biggest feature of the present invention is, however, that the moulded article has a smooth and soft tactile sensation on the surface thereof without foaming and further has high rigidity, high impact strength and high heat resistance.

The moulded article of the present invention can be obtained by using cost-effective components in a simple production method, resulting in reduced production cost.

Therefore, the moulded article can be suitably used for applications such as automobile interior and exterior parts such as instrument panels, glove compartments, console boxes, door trims, armrests, grip knobs, various trims, ceiling parts, housings, pillars, mud guards, bumpers, fenders, back doors, fan shrouds and the like as well as parts in engine compartments, parts for electric/electronic devices such as televisions and vacuum cleaners, various industrial parts, parts for household facilities such as toilet seats, building materials and the like. The moulded article is particularly suitable for automobile parts because of the properties described above.

(1) Low shrinkage

The moulded article of the present invention has low shrinkage and preferably has the average of the moulding shrinkage ratio in the resin flow direction (MD) and the moulding shrinkage ratio in the direction perpendicular to the resin flow direction (TD) of 4/1000 or less, preferably 3.5/1000 or less and still more preferably 3/1000 to 1.5/1000.

The average of the moulding shrinkage ratio in the resin flow direction (MD) and the moulding shrinkage ratio in the direction perpendicular to the resin flow direction (TD) is obtained as follows: certain number of specimens are maintained under a certain condition and subjected to the measurement of the distance between gauge lines in the resin flow direction (MD) and in the direction perpendicular to the resin flow direction (TD) of the specimens, and the shrinkage ratio relative to the distances between the gauge lines engraved on a metal mould is calculated for all specimens and is averaged. The decreased value means lower shrinkage of the moulded article. Specifically, the average is preferably 4/1000 or less in view of improving texture of the moulded article and more preferably 3.5/1000 or less and still more preferably 3/1000 to 1.5/1000.

(2) Grain transferability

The moulded article of the present invention can contain a grained surface. The moulded article has preferable grain transferability and preferably has the gloss ratio between the grained surface gloss value and the mirror surface gloss value corresponding to grained surface gloss value/mirror surface gloss value of 0.030 or less, more preferably 0.025 or less and still more preferably 0.020 to 0.010. The moulded article has lower gloss ratio and has preferable grain transferability in a method having high accuracy.

The gloss ratio (grain transferability) as used herein is a value obtained by calculating grained surface gloss value /mirror surface gloss value from the gloss values (%) measured with a glossmeter under a certain condition of a grained surface and a mirror surface of specimens prepared by injection moulding with a certain metal mould.

The index representing grain transferability, of which improvement is one of problems to be solved by the present invention, is important. In order to represent grain transferability that significantly affects the degree of texture in appearance of the moulded article, the ratio between the gloss in a grained surface metal mould (grained surface gloss) and the gloss in a mirror surface metal mould (mirror surface gloss), namely "grain gloss/mirror surface gloss" is effective. Of course, grain transferability can be represented in some degree by solely the value of "grain gloss" because low gloss can be indicated. However, by employing the ratio thereof to the value of the "mirror surface gloss", the accuracy may be increased. Thus the decreased gloss ratio means preferable grain transferability.

(3) Tactile sensation and balanced physical properties (high rigidity, high impact strength, high heat resistance)

The moulded article of the present invention has a preferable tactile sensation and has balanced physical properties (high rigidity, high impact strength, high heat resistance).

Thus the moulded article of the present invention preferably has the flaw resistance according to the 5-finger method of 6 N or more, more preferably 7 N or more. It is preferable that the flaw resistance according to the 5-finger method is high and the moulded articles having the value of 13 N or more can be practically used without noticing the difference.

The flaw resistance according to the 5-finger method as used herein can be measured by scratching by means of a scratching tester a specimen under a certain condition and recording the load at which the scratch whitening is noticeable. The increased load means preferable flaw resistance. The moulded article of the present invention has preferable flaw resistance and thus has a smooth tactile sensation.

In addition, the moulded article of the present invention has balanced physical properties and has high rigidity, high impact strength and high heat resistance.

Thus the moulded article of the present invention preferably has HDD (D hardness)/flexural modulus (MPa) of 0.060 or less and more preferably 0.050 to 0.015.

The HDD (D hardness) is measured according to JIS K7215 on a specific specimen at a test temperature of 23°C.

The flexural modulus is measured according to JIS K7171 on a specific specimen at a test temperature of 23°C.

The impact strength may be, for example, Charpy impact strength (notched) and can be measured according to JIS K7111 on a specific specimen at a test temperature of 23°C.

The heat resistance may be, for example, deflection temperature under load (HDT), and can be measured according to JIS K7191-1 and 2 on a specimen according to JIS K7152-1 at a load of 0.45 MPa. The moulded article of the present invention preferably has the HDT (0.45 MPa) of 85°C or more, more preferably 100°C or more and still more preferably 110°C or more.

The moulded article of the present invention has, in spite of high rigidity, a soft tactile sensation. In addition, the moulded article has high impact strength, high heat resistance and balanced physical properties.

The index representing the smooth and soft tactile sensation of the surface of the moulded article without foaming, of which improvement is one of problems to be solved by the present invention, is also important. With regard to smoothness, flaw resistance described hereinbelow may be mentioned and the moulded article having preferable flaw resistance (having a high N value, namely the scratch whitening is not noticed until a high load) can be regarded as having the smooth tactile sensation.

With regard to the soft tactile sensation, the surface hardness of the moulded article may be mentioned. For example, in the field of resin compositions and moulded articles thereof having relatively low rigidity and thus high flexibility, the surface hardness is mostly measured with a durometer.

The method using a durometer includes, for example, "type A" and "type D" which use indenters having different nose shapes and different test loads. In both types of the method, a test load that varies according to the depth of an indent is applied to a specimen using an indenter and the surface hardness of the specimen is determined from the depth of the generated indent.

The indenter used for the "type A" method has a plane tip of 0.79 mm$\varphi$ and the indenter used for the "type D" method has a needle-like shape tip of 0.1 mm R.

Thus the measured value from the "type A" method (= HDA (A hardness)) may possibly reflect the internal rigidity (hardness), in addition to the state (hardness) in the vicinity of the surface of the subject resin composition and moulded article thereof, while the measured value from the "type D" method (= HDD (D hardness)) may represent the value further focusing, namely being less affected by the internal rigidity (hardness) of the subject resin composition and moulded article thereof, on the state (hardness) in the vicinity of the surface (top surface) of the resin composition and moulded article thereof.

Accordingly, the value of HDD (D hardness) is an important index for a soft tactile sensation of the moulded article and the decreased value means a soft tactile sensation.

The resin composition and the moulded article thereof having a low ratio of flexural modulus to HDD (HDD/flexural strength (MPa)) of the resin composition and the moulded article, namely having a low ratio of the hardness in the vicinity of the surface (top surface) to the rigidity of the substantial resin composition and the moulded article thereof have a soft tactile sensation in spite of high rigidity (usually, polypropylene resin compositions having an increased rigidity may have a hard tactile sensation), and thus is preferable.

(4) Moulded appearance

The moulded article of the present invention has preferable moulded appearance (weld appearance).

Namely, the moulded article of the present invention does not have a visible weld, or has a few weld which is unnoticeable, or has a noticeable weld which does not affect the practicality thereof.

The weld appearance as used herein can be measured under the following conditions.

- Specimen = Flat plate (350 × 100 × 3t (mm)).
- Grained surface = automobile interior film grain No. 421. Depth = 100 $\mu$m.
- Moulding machine = Type IS220 injection moulding machine from Toshiba Machine Co., Ltd.
- Moulding conditions = Double point gate, moulding temperature: 200°C, metal mould temperature: 30°C, filling time: 4.5 s.

The specimen prepared under the above conditions is visually observed and judged for the visibility of a weld in accordance with the following criteria.

@: No weld is visible.
O: A minute weld is visible which is unnoticeable.
Δ: A weld is visible which does not affect the practicality.
×: A significant weld is observed which affects the practicality.

Examples

The present invention is further illustrated in detail by way of Examples which do not limit the present invention.

Evaluation methods, analysis methods and materials used in Examples are as follows.

1. Evaluation methods and analysis methods

(1) Moulding shrinkage ratio:

- Specimen = Flat plate (80 × 40 × 2t (mm)).
- Moulding machine = Type EC20 injection moulding machine from Toshiba Machine Co., Ltd.
- Moulding conditions = Moulding temperature: 200°C, metal mould temperature: 30°C, injection pressure: 60 MPa.
- Measurement method = The specimens were conditioned at 23°C for 48 hours prior to measurements of the distance between gauge lines in the resin flow direction (MD) and in the direction perpendicular to the resin flow direction (TD) of the specimens and measurement of the shrinkage ratio relative to the distance between the gauge lines engraved on a metal mould. In this case, the gauge line length of the metal mould in MD is 70 mm and the gauge line length of the metal mould in TD is 30 mm. The average was calculated between the shrinkage ratio in MD and the shrinkage ratio in TD (n = 5).

(2) Gloss (grain transferability):

- Specimen = Flat plate (120 × 120 × 3t (mm)).
- Measured plane (the grained surface and mirror surface as described hereinbelow of the specimen)
  Grained surface = Automobile interior film grain No. 421. Depth = 100 $\mu$m.
  Mirror surface = #1000.
- Moulding machine = Type IS170 injection moulding machine from Toshiba Machine Co., Ltd.
- Moulding conditions = Moulding temperature: 200°C, metal mould temperature: 30°C, injection pressure: 60 MPa.
- Glossmeter = Type VG-2000 from Nippon Denshoku Industries Co., Ltd.

(i) Mirror surface gloss value (%) (mirror surface gloss):

The gloss of the mirror surface of the specimens was measured with the glossmeter under the condition of incident angle of 60° (n = 5).

(ii) Grained surface gloss value (%) (grained surface gloss):

The gloss of the grained surface of the specimens was measured with the glossmeter under the condition of incident angle of 60° (n = 5).

(iii) Grain transferability:

The ratio between the grained surface gloss value (%) and the mirror surface gloss value (%) (grained surface gloss value/mirror surface gloss value) was calculated to obtain the grain transferability.

(3) Flaw resistance (5-finger test):

- Specimen = Flat plate (120 × 120 × 3t (mm)).
- Measured plane = Automobile interior film grain No. 421. Depth = 100 $\mu$m.
- Moulding machine = Type IS170 injection moulding machine from Toshiba Machine Co., Ltd.
- Moulding conditions = Moulding temperature: 200°C, metal mould temperature: 30°C, injection pressure: 60 MPa.
- Scratch tester = "SCRATCH & MAR TESTER" from ROCKWOOD SYSTEMS AND EQUIPMENT
- Measurement method = On the above tester, the specimen is scratched with loads from 3 N to 13 N with 1 N intervals using a scratching head having a shape (curvature radius: 0.5 mm, ball shape) at a scratching speed of 100 mm/min. The form of a scratch is visually judged from an angle of 90 degrees relative to the specimen and the load is recorded measured at which the scratch whitening is noticeable. The number of specimens (n) is 10 and the average is calculated and designated as the load. The test temperature is 23°C. The increased load means preferable flaw resistance.

(4) HDD (D hardness):

According to JIS K7215, the measurement was carried out at a test temperature = 23°C. The specimen used was the above specimen for moulding shrinkage ratio measurement (3 specimens are stacked).

(5) Rigidity (flexural modulus):

According to JIS K7171, the measurement was carried out at a test temperature = 23°C. The specimen was a flat plate specimen for physical property evaluation described hereinbelow.

- Moulding machine = Type EC20 injection moulding machine from Toshiba Machine Co., Ltd.
- Metal mould = A mould with 2 cativies for flat plate specimen (10 × 80 × 4t (mm)) for physical property evaluation.
- Moulding conditions = Moulding temperature: 220°C, metal mould temperature: 30°C, injection pressure: 50 MPa, injection period: 5 sec, cooling period: 20 sec.

(6) Impact strength (Charpy impact strength (notched)):

According to JIS K7111, the measurement was carried out at a test temperature = 23°C. The specimen was the above flat plate specimen for physical property evaluation.

(7) Deflection temperature under load (HDT):

The specimen according to JIS K7152-1 was subjected to the measurement according to JIS K7191-1 and 2 at a load of 0.45 MPa.

(8) Weld appearance (opposing weld):

- Specimen = Flat plate (350 × 100 × 3t (mm)).
- Grained surface = Automobile interior film grain No. 421 Depth = 100 $\mu$m.
- Moulding machine = Type IS220 injection moulding machine from Toshiba Machine Co., Ltd.
- Moulding conditions = Double point gate, moulding temperature: 200°C, metal mould temperature: 30°C, filling time: 4.5 s.

The specimen prepared under the above conditions was visually observed and judged for the visibility of a weld I accordance with the following criateria.

@: No weld is visible.
○: A minute weld is visible which is unnoticeable.
Δ: A weld is visible which does not affect the practicality.
×: A significant weld is observed which affects the practicality.

(9) MFR:

According to JIS K7210, the measurement was carried out at a test temperature = 230°C and a load = 2.16 kg.

(10) Average length of component (II) in resin composition pellets or moulded article:

The resin composition pellets or moulded article is burnt or melted so that the component (II) is remained, which is then spread on a glass plate or like and measured with a digital microscope (Type VHX-900 from Keyence Corporation). An average was calculated from the values measured by the above method.

(11) Identification of component (I-A) and component (I-B) in component (I) and the like:

It is a well known procedure to a person skilled in the art to evaluate the crystallinity distribution of propylene-ethylene random copolymers by temperature rising elusion fractionation (TREF; hereinafter merely referred to as TREF). The detailed measurement methods may be found in the following references, for example.

G. Glockner, J. Appl. Polym. Sci.: Appl. Polym. Symp.; 45, 1-24 (1990)

L. Wild, Adv. Polym. Sci.; 98, 1-47 (1990)

J. B. P. Soares, A. E. Hamielec, Polymer; 36, 8, 1639-1654

(1995) The component (I-A) and component (I-B) in the component (I) used for the present invention are identified by TREF.

The method is specifically described by referring to FIG. 1 showing the elution amount and the integral elution amount obtained by TREF. In the TREF elution curve (a plot of the elution amount against temperature), the components (I-A) and (I-B) show elution peaks at T(A) and T(B) respectively because of the difference in crystallinity. As the difference between the temperatures is high, the components can be mostly separated at an intermediate temperature T(C) (= {T(A) + T(B)}/2).

The measurement temperature lower limit of TREF is -15°C for the instrument used for the present measurement. When the crystallinity of the component (I-B) is very low or the component is amorphous, no peak may be observed within the measurement temperature range (in this case, the concentration of the component (I-B) dissolved in a solvent at the measurement temperature lower limit (namely -15°C) is detected).

Although, at this occasion, T (B) is believed to be at or lower than the measurement temperature lower limit, the value cannot be measured. In such a case, T(B) is defined as -15°C that is the measurement temperature lower limit.

The integral amount of components eluted up to T (C) is defined as W(B)% by weight and the integral amount of components eluted at or above T(C) is defined as W(A)% by weight. Then W(B) approximately corresponds to the amount of the component (I-B) which has low crystallinity or is amorphous and the integral amount W(A) of components eluted at or above T(C) approximately corresponds to the amount of the component (I-A) which has relatively high crystallinity. The elution amount curve obtained by TREF and various temperatures and amounts described above which are determined from the curve are calculated as illustrated in FIG. 1.

(a) TREF measurement method

In the present invention, the TREF measurement is specifically carried out as follows. A specimen is dissolved at 140°C in ortho-dichlorobenzene (ODCB (containing 0.5 mg/mLBHT)) to obtain a solution. The solution is introduced into a TREF column at 140°C, cooled at a cooling rate of 8°C/min to 100°C, further cooled at a cooling rate of 4°C/min to -15°C and maintained for 60 min. A solvent, ODCB (containing 0.5 mg/mLBHT), is allowed to pass through the column at the flow rate of 1 mL/min, so that the component dissolved in ODCB at -15°C in the TREF column is eluted for 10 min. The temperature of the column was then linearly increased at a heating rate of 100°C/hour to 140°C, thereby obtaining an elution curve.

The instruments and the like are summarized as follows.

TREF column: 4.3 mmφ × 150 mm stainless column

Column packing material: 100 μm surface deactivated glass beads

Heating system: Aluminium heating block

Cooling system: Peltier device (cooling of Peltier device is by water cooling)

Temperature distribution: ±0.5°C

Thermostat: Digital programmed thermostat KP1000 from Chino Corporation (valve oven)

Heating system: Air oven

Temperature at measurement: 140°C

Temperature distribution: ±1°C

Valve: 6-way valve, 4-way valve

Injection system: Loop injection

Detector: Wavelength fixed infrared detector, MIRAN 1A from FOXBORO

Detection wavelength: 3.42 μm

High temperature flow cell: Micro flow cell for LC-IR, optical path length: 1.5 mm, shape of window: circle having 2φ × 4 mm length, synthetic sapphire window plate

Sample concentration: 5 mg/mL

Sample injection amount: 0.1 mL

(b) Determination of ethylene content in component (I-A) and component (I-B)

(i) Separation of component (I-A) and component (I-B):

Based on T(C) determined by the previous TREF measurement, the soluble component (I-B) at T(C) and the insoluble component (I-A) at T(C) are separated on a splitting divider according to a temperature rising column isolation method and the ethylene content of the components is determined by NMR.

The detailed measurement method for the temperature rising column isolation method may be found in the following reference.

Macromolecules; 21, 314-319 (1988)

Specifically, the following method is used in the present invention.

(ii) Separation conditions:

A cylindrical column having a diameter of 50 mm and a height of 500 mm is charged with a glass bead carrier (80 to 100 mesh) and maintained at 140°C.

An ODCB solution (10 mg/mL) (200 mL) of a specimen dissolved at 140°C is introduced to the column. The temperature of the column is then cooled to 0°C at a cooling rate of 10°C/hour. After holding at 0°C for 1 hour, the temperature of the column is increased at a heating rate of 10°C/hour to T(C) and maintained for 1 hour. Throughout the procedure, the accuracy of temperature control of the column is $\pm 1$°C.

While the temperature of the column is hold at T(C), 800 mL of ODCB at T(C) is allowed to pass through the column at a rate of 20 mL/min, so that the component (s) in the column which is (are) soluble at T(C) is(are) eluted and recovered.

The temperature of the column is increased to 140°C at a heating rate of 10°C/min and is maintained at 140°C for 1 hour. A solvent (ODCB; 800 mL) at 140°C is then allowed to pass through the column at a rate of 20 mL/min, so that the component(s) which is(are) insoluble at T(C) is(are) eluted and recovered.

The solutions containing polymers obtained by separation are concentrated to 20 mL using an evaporator and the polymers are precipitated in a 5-fold volume of methanol. The precipitated polymers are recovered by filtration and dried in a vacuum dryer overnight.

(iii) Measurement of ethylene content by $^{13}$C-NMR:

The ethylene content of the respective component (I-A) and component (I-B) obtained by the above separation is determined by analyzing $^{13}$C-NMR spectra measured according to the proton complete decoupling method under the following conditions.

Instrument: GSX-400 from JEOL Ltd. (carbon nuclear resonance frequency: 400 MHz)
Solvent: ODCB/deuterated benzene = 4/1 (volume ratio)
Concentration: 100 mg/mL
Temperature: 130°C
Pulse angle: 90°
Pulse interval: 15 seconds
Integration times: 5000 or more

Designation of spectra may be carried out by referring to the following reference, for example.

Macromolecules; 17, 1950 (1984)

Designation of spectra measured under the above conditions is shown in the following table. In this table, symbols such as $S_{\alpha\alpha}$ are in conformity with the notation described in the following reference, and P represents a methyl carbon, S represents a methylene carbon and T represents a methine carbon.

Carman, Macromolecules; 10, 536 (1977)

Table 1

| Chemical shift (ppm) | Designation |
| --- | --- |
| 45-48 | $S_{\alpha\alpha}$ |
| 37.8-37.9 | $S_{\alpha\gamma}$ |
| 37.4-37.5 | $S_{\alpha\delta}$ |
| 33.1 | $T_{\delta\delta}$ |
| 30.9 | $T_{\beta\delta}$ |
| 30.6 | $S_{\gamma\gamma}$ |
| 30.2 | $S_{\gamma\delta}$ |

(continued)

| Chemical shift (ppm) | Designation |
|---|---|
| 29.8 | $S_{\delta\delta}$ |
| 28.7 | $T_{\beta\beta}$ |
| 27.4-27.6 | $S_{\beta\delta}$ |
| 24.4-24.7 | $S_{\beta\beta}$ |
| 19.1-22.0 | P |

There may be six different triads of PPP, PPE, EPE, PEP, PEE and EEE in a copolymer chain, wherein "P" represents a propylene unit and "E" represents an ethylene unit in the copolymer chain. As described in Macromolecules, 15, 1150 (1982) and other references, the concentration of these triads can be correlated to the peak intensity of spectra by the following relations <1> to <6>.

$$[PPP] = k \times I \ (T_{\beta\beta}) \qquad <1>$$

$$[PPE] = k \times I \ (T_{\beta\delta}) \qquad <2>$$

$$[EPE] = k \times I \ (T_{\delta\delta}) \qquad <3>$$

$$[PEP] = k \times I \ (S_{\beta\beta}) \qquad <4>$$

$$[PEE] = k \times I \ (S_{\beta\delta}) \qquad <5>$$

$$[EEE] = k \times [I(S_{\delta\delta})/2 + I(S_{\gamma\delta})/4] \qquad <6>$$

In the above formulae, the symbol [ ] represents the fraction of a triad and for example [PPP] means the fraction of the PPP triad relative to all triads.

Namely,

$$[PPP] + [PPE] + [EPE] + [PEP] + [PEE] + [EEE] = 1 \quad <7>.$$

In the above formulae, k is a constant and I represents the intensity of a spectrum and for example I $(T_{\beta\beta})$ means the intensity of the peak at 28.7 ppm which is designated as $T_{\beta\beta}$.

By using the relations <1> to <7>, the fraction of triads is determined and then the ethylene content is determined according to the following formula.

$$\text{Ethylene content (mol\%)} = ([PEP] + [PEE] + [EEE]) \times 100$$

The propylene random copolymer according to the present invention may contain a small amount of propylene hetero bonds (2,1-bond and/or 1,3-bond) which generate the following minute peaks.

Table 2

| Chemical shift (ppm) | Designation |
| --- | --- |
| 42.0 | $S_{\alpha\alpha}$ |
| 38.2 | $T_{\alpha\gamma}$ |
| 37.1 | $S_{\alpha\delta}$ |
| 34.1-35.6 | $S_{\alpha\beta}$ |
| 33.7 | $T_{\gamma\gamma}$ |
| 33.3 | $T_{\gamma\delta}$ |
| 30.8-31.2 | $T_{\beta\gamma}$ |
| 30.5 | $T_{\beta\delta}$ |
| 30.3 | $S_{\alpha\beta}$ |
| 27.3 | $S_{\beta\gamma}$ |

In order to determine a precise ethylene content, these peaks derived from the hetero bonds may need to be taken into account for calculation. However, because complete separation and identification of the peaks derived from hetero bonds are difficult and the amount of the hetero bonds is low, the ethylene content herein is determined based on the relations of <1> to <7>, similar to the analysis of copolymers which do not substantially contain hetero bonds and produced by using Ziegler-Natta catalysts.

The ethylene content is transformed from mol% to % by weight by the following formula.

```
Ethylene content (% by weight) = (28 × X/100)/{28 × X/100 +
42 × (1-X/100)} × 100
```

In the formula, X is the ethylene content in mol%. The ethylene content [E]W of the whole propylene-ethylene block copolymer is calculated by the following formula from the ethylene contents [E]A and [E]B of the component (I-A) and the component (I-B), respectively, measured as above and the weight ratios W (A) and W(B) (% by weight) of the components calculated by TREF.

```
[E]W = {[E]A × W(A) + [E]B × W(B)}/100 (% by weight)
```

(12) Melting peak temperature (Tm) of component (I):

The measurement is carried out with type DSC6200 from Seiko Instruments Inc. by maintaining 5.0 mg of a specimen at 200°C for 5 minutes, crystallizing the sample at a cooling rate of 10°C/min to 40°C and then melting the sample at a heating rate of 10°C/min.

(13) Peak of tan $\delta$ curve of component (I):

The measurement is carried out by solid viscoelasticity measurement. A specimen is a strip with 10 mm width $\times$ 18 mm length $\times$ 2 mm thickness excised from a sheet with 2 mm thickness obtained by injection moulding under the following conditions.

The instrument is ARES from Rheometric Scientific Inc.

Standard Number: JIS-7152 (ISO294-1)
Frequency: 1 Hz
Measurement temperature: Stepwise heating is started from -60°C until a sample is melted.
Strain: In the range of 0.1 to 0.5%
Moulding machine: TU-15 injection moulding machine from Toyo Machinery & Metal Co., Ltd.
Moulding machine setting temperature: from under the hopper, 80, 80, 160, 200, 200 and 200°C

Metal mould temperature: 40°C
Injection speed: 200 mm/sec (speed in the cavity of the metal mould)
Injection pressure: 800 kgf/cm$^2$
Holding pressure: 800 kgf/cm$^2$
Pressure holding time: 40 sec
Shape of metal mould: Flat plate (thickness: 2mm, width 30 mm, length: 90 mm)

(14) Contents of propylene-ethylene copolymer moiety and ethylene in component (V):

• Analysis instrument used

(i) Cross fractionation instrument

CFC T-100 from Dia Instruments Co., Ltd. (hereinafter abbreviated as CFC)

(ii) Fourier transform infrared absorption spectrometry

FT-IR, 1760X from Perkin Elmer Inc.
A detector attached to the CFC which is an infrared spectrophotometer with a fixed wavelength is detached and replaced by FT-IR, which is used as a detector. The transfer line between the outlet of a solution eluted from the CFC and the FT-IR has a length of 1 m and is maintained at 140°C throughout the measurement. A flow cell attached to the FT-IR has an optical path length of 1 mm and an optical path width of 5 mmφ and is maintained at 140°C throughout the measurement.

(iii) Gel permeation chromatography (GPC)

Three GPC columns AD806MS from Showa Denko K.K. connected in series are used in the latter part of the CFC.

• CFC measurement conditions

(i) Solvent: Ortho-dichlorobenzene (ODCB)
(ii) Sample concentration: 4 mg/mL
(iii) Injection amount: 0.4 mL
(iv) Crystallization: Cooling is carried out from 140°C to 40°C over about 40 minutes.
(v) Fractionation method: Fractionation temperature is 40, 100 and 140°C and three fractions are obtained in total. The fractions are automatically transferred to the FT-IR analyzer without further treatment.
(vi) Solvent flow rate during elution: 1 mL/min

• FT-IR measurement conditions

After initiation of elution of a sample solution from GPC in the latter part of the CFC, FT-IR measurement is carried out under the following conditions and GPC-IR data is obtained for the above-mentioned fractions 1 to 3.

(i) Detector: MCT
(ii) Resolution power: 8 cm$^{-1}$
(iii) Measurement interval: 0.2 min (12 sec)
(iv) Integration times per measurement: 15

• Calculation of properties of propylene-ethylene copolymer moiety

Fractionation temperature is 40, 100 and 140°C and three fractions are obtained in total. The propylene-ethylene copolymer moiety corresponds to the ethylene component of the 100°C fraction and the 40°C fraction component. Namely, the contents of the 40, 100 and 140°C fractions are respectively designated as F40, F100 and F140 (F40 + F100 + F140 = 100% by weight). The amount of the ethylene component in the 100°C fraction is designated as F100E and the amount of other components is designated as F100F (F100E + F100F = F100). Thus the content of the propylene-ethylene copolymer moiety can be represented by F40 + F100E.

The ethylene content in the propylene-ethylene copolymer moiety is obtained by dividing the ethylene content in the 40°C and 100°C fractions by the amount of the propylene-ethylene copolymer component.

Namely, the amount of ethylene in the 40°C fraction is designated as F40E and the amount of other components is designated as F40F (F40E + F40F = F40), then the ethylene content in the propylene-ethylene copolymer moiety is represented by the formula:

$$100 \times (F40E + F100E)/(F40 + F100E).$$

(15) Weight average molecular weight (Mw-H) of propylene homopolymer moiety in component (V) and weight average molecular weight (Mw-W) of whole component (V):

The (Mw-H) and (Mw-W) for the component (V) are determined by the following method. Namely, in the analysis described in the previous section, the component eluted into ortho-dichlorobenzene (ODCB) at 100°C to 140°C from the component (V) is defined as the propylene homopolymer moiety. Thus, while heating, the component eluted into ortho-dichlorobenzene at 100°C to 140°C is extracted and determined for the weight average molecular weight by gel permeation chromatography (GPC) to obtain (Mw-H). All components eluted up to 140°C into ortho-dichlorobenzene are determined for the weight average molecular weight by GPC to obtain the weight average molecular weight (Mw-W) of the whole component (V).

2. Materials

(1) Component (I): propylene-ethylene block copolymer (I)

(The followings are pellets containing an antioxidant and a neutralizing agent.)

I-1: A polypropylene from Japan Polypropylene Corporation was used which had the following compositions and physical properties.

This material was polymerized with a metallocene catalyst, and obtained by sequentially polymerizing 56.0% by weight of propylene-ethylene random copolymer component (I-A) having an ethylene content of 1.8% by weight in the first step and 44.0% by weight of propylene-ethylene random copolymer component (I-B) having an ethylene content that is 9.2% by weight higher than that of the component (I-A) in the second step. The material had a melting peak temperature (Tm) measured by DSC of 133.0°C, showed a single peak on the tan δ curve at -8°C in the temperature-loss tangent curve obtained by the solid viscoelasticity measurement and had MFR (230°C, 2.16 kg load) of 6 g/10 min as the whole copolymer. It should be noted that the amounts added in Examples 8 and 9 include the amount of polypropylene contained in the component (II-2) described hereinbelow. I-2: A polypropylene from Japan Polypropylene Corporation was used which had the following compositions and physical properties.

The material was polymerized with a metallocene catalyst, and obtained by sequentially polymerizing 56.2% by weight of propylene-ethylene random copolymer component (I-A) having an ethylene content of 2.0% by weight in the first step and 43.8% by weight of propylene-ethylene random copolymer component (I-B) having an ethylene content that is 9.2% by weight higher than that of the component (I-A) in the second step. The material had a melting peak temperature (Tm) measured by DSC of 135.3°C, showed a single peak on the tan δ curve at -8°C in the temperature-loss tangent curve obtained by the solid viscoelasticity measurement and had MFR (230°C, 2.16 kg load) of 18g/10 min as the whole copolymer.

(2) Component (II): fiber (II)

II-1: A glass fiber T480H from Nippon Electric Glass Co., Ltd. (chopped strands, fiber diameter; 10 μm, length: 4 mm).
II-2: Funcster from Japan Polypropylene Corporation (glass fiber containing pellets having glass fiber content = 40% by weight and polypropylene corresponding to component (V) = 60% by weight. The length of pellets in extrusion direction = 8 mm). With a whole solid glass fiber being used as a reference, 96% of glass fibers in pellets had a length of 8 mm that was the same as the length of the pellets. Thus the glass fibers in the pellets had substantially the same length as the glass fiber containing pellets. The glass fiber length was calculated by burning the pellets, observing the number of remained glass fibers on a microscope (among 100 fibers per field), determining non-fractured and undamaged glass fibers and determining the proportion thereof (calculated as the value relative to all pellets).

II-3: Talc from Fuji Talc Industrial Co., Ltd. (average particle diameter = 6.3 μm).

(3) Component (III): Modified polyolefin (III)

III-1: Maleic anhydride modified polypropylene from Arkema K.K. (OREVAC CA100) having a degree of acid modification (grafting percentage) = 0.8% by weight.

(4) Component (IV): thermoplastic elastomer (IV)

IV-1: Tafmer A1050S (from Mitsui Chemicals Ltd., ethylene-butene copolymer elastomer, MFR (230°C, 2.16 kg load) : 2g/10 min, density: 0.862 g/cm$^3$, shape = pellet).
IV-2: Engage EG8200 (from The Dow Chemical Company, ethylene-octene copolymerized elastomer, MFR (230°C, 2.16 kg load): 10 g/10 min, density: 0.870 g/cm$^3$, shape = pellet).

(5) Component (V): propylene polymer resin (V)

V-1: This material was obtained by adding, to Newcon from Japan Polypropylene Corporation having the following composition (100 parts by weight), 0.2 parts by weight of an agent for decreasing the molecular weight, Perbutyl P-40 from NOF Corporation (agent for decreasing the molecular weight which is 1,3-di-(t-butylperoxyisopropyl)benzene diluted to 40%), and kneading and granulating the mixture (using a single-screw extruder, kneading temperature: 210°C) (final MFR (230°C, 2.16 kg load) = 7 g/10 min).
The material used in the above is a propylene-ethylene block copolymer resin which is obtained by polymerization using a Ziegler catalyst, has a MFR (230°C, 2.16 kg load) of 1 g/10 min for the whole copolymer resin, contains 47% by weight of propylene homopolymer moiety, contains 53% by weight of ethylene-propylene copolymer moiety which has an ethylene content of 36% by weight, and has (Mw-H)/(Mw-W) of 0.45.
V-2: This material was Newcon from Japan Polypropylene Corporation having the following composition and physical properties.
This material is a propylene-ethylene block copolymer resin which is obtained by polymerization using a Ziegler catalyst, has a MFR (230°C, 2.16 kg load) of 28 g/10 min for the whole copolymer resin, contains 73% by weight of propylene homopolymer moiety, contains 27% by weight of ethylene-propylene copolymer moiety which has an ethylene content of 37% by weight, and has (Mw-H)/(Mw-W) of 0.79.
V-3: This material was Newcon from Japan Polypropylene Corporation having the following composition and physical properties.
This material is a propylene-ethylene block copolymer resin which is obtained by polymerization using a Ziegler catalyst, has a MFR (230°C, 2.16 kg load) of 22 g/10 min for the whole copolymer resin, contains 61% by weight of propylene homopolymer moiety, contains 39% by weight of ethylene-propylene copolymer moiety which has an ethylene content of 53% by weight and has (Mw-H)/(Mw-W) of 0.98.
V-4: Novatec MA04A (trade name; from Japan Polypropylene Corporation)
A Ziegler catalyst, propylene homopolymer resin (230°C, 2.16 kg load) 40 g/10 min.

(6) Component (VI): fatty acid amide (VI)

VI-1: Erucic acid amide from Nippon Fine Chemical Co., Ltd. (Neutron-S).

(7) Component (VII): peroxide (VII)

VII-1: Perbutyl P-40 from NOF Corporation (agent for decreasing the molecular weight which is 1,3-di-(t-butylperoxyisopropyl)benzene diluted to 40%).

3. Examples and Comparative Examples

[Examples 1 to 16 and Comparative Examples 1 to 5]

(1) Production of fiber reinforced compositions

The components (I) to (VII) were mixed at the proportions shown in Table 3 with the following additives, kneaded and granulated under the following conditions.
In this production, 0.1 parts by weight of IRGANOX 1010 from BASF and 0.05 parts by weight of IRGAFOS 168 from BASF were added relative to the whole composition of the components (I) to (VII) of 100 parts by weight.
Kneading device: Type "KZW-15-MG" two-screw extruder from Technovel Corporation.
Kneading conditions: temperature = 200°C, screw rotation rate = 400 rpm, discharge rate = 3 kg/Hr.
The component (II) was side-fed from the middle of the extruder. In the resin pellets (Examples 1 to 7 and 10 to 16), the component (II) had an average length within the range of 0.45 mm to 0.7 mm. In Examples 8 and 9, the amount of the component (III-1) is shown as the amount to which the component (III) in the component (II-2) has been added, and kneading and granulating were carried out without the component (II-2).

Table 3

| | Composition | | | | | | | | | | | | |
| | Propylene-ethylene block copolymer (I) | | Fiber (filler) (II) | | Modified polyolefin (III) | | Thermoplastic elastomer (IV) | | Propylene polymer resin (V) | | Fatty acid amide (VI) | | Peroxide (VII) | |
| | Type | wt% | Type | wt% | Type | parts by weight | Type | parts by weight | Type | parts by weight | Type | parts by weight | Type | parts by weight |
|---|---|---|---|---|---|---|---|---|---|---|---|---|---|---|
| Ex. 1 | I-1 | 90 | II-1 | 10 | - | - | - | - | - | - | - | - | - | - |
| Ex. 2 | I-1 | 90 | II-1 | 10 | III-1 | 1.5 | - | - | - | - | - | - | - | - |
| Ex. 3 | I-1 | 90 | II-1 | 10 | III-1 | 1.5 | - | - | - | - | VI-1 | 0.2 | - | - |
| Ex. 4 | I-1 | 79 | II-1 | 21 | III-1 | 3.1 | - | - | - | - | - | - | - | - |
| Ex. 5 | I-1 | 79 | II-1 | 21 | III-1 | 3.1 | - | - | - | - | VI-1 | 0.2 | - | - |
| Ex. 6 | I-2 | 90 | II-1 | 10 | III-1 | 1.5 | - | - | - | - | - | - | - | - |
| Ex. 7 | I-2 | 79 | II-1 | 21 | III-1 | 3.1 | - | - | - | - | VI-1 | 0.2 | - | - |
| Ex. 8 | I-1 | 90 | II-2 | 10 | III-1 | 1.5 | - | - | - | - | - | - | - | - |
| Ex. 9 | I-1 | 90 | II-2 | 10 | III-1 | 1.5 | - | - | - | - | VI-1 | 0.2 | - | - |
| Ex. 10 | I-1 | 87 | II-1 | 13 | III-1 | 1.9 | IV-1 | 25 | - | - | - | - | - | - |
| Ex. 11 | I-1 | 83 | II-1 | 17 | III-1 | 2.6 | - | - | V-1 | 68 | - | - | VII-1 | 0.3 |
| Ex. 12 | I-1 | 59 | II-1 | 41 | III-1 | 3.1 | - | - | - | - | - | - | VII-1 | 0.5 |
| Ex. 13 | I-1 | 70 | II-1 | 30 | III-1 | 1.8 | IV-2 | 17 | - | - | VI-1 | 0.1 | VII-1 | 0.6 |
| Ex. 14 | I-1 | 89 | II-1 | 11 | III-1 | 1.7 | - | - | V-4 | 11 | - | - | - | - |
| Ex. 15 | I-2 | 64 | II-1 | 36 | III-1 | 1.4 | IV-2 | 20 | V-4 | 21 | VI-1 | 0.1 | VII-1 | 0.2 |
| Ex. 16 | I-2 | 47 | II-1 | 53 | III-1 | 2.7 | IV-2 | 31 | - | - | VI-1 | 0.1 | VII-1 | 0.2 |
| Comp. Ex. 1 | - | - | II-1 | 100 | III-1 | 15.0 | - | - | V-2 | 885 | - | - | - | - |
| Comp. Ex. 2 | - | - | II-1 | 100 | III-1 | 15.0 | - | - | V-3 | 885 | - | - | - | - |
| Comp. Ex. 3 | I-1 | 90 | II-3 | 10 | - | - | - | - | - | - | - | - | - | - |

(continued)

| | Composition | | | | | | | | | | | | | |
|---|---|---|---|---|---|---|---|---|---|---|---|---|---|---|
| | Propylene-ethylene block copolymer (I) | | Fiber (filler) (II) | | Modified polyolefin (III) | | Thermoplastic elastomer (IV) | | Propylene polymer resin (V) | | Fatty acid amide (VI) | | Peroxide (VII) | |
| | Type | wt% | Type | wt% | Type | parts by weight | Type | parts by weight | Type | parts by weight | Type | parts by weight | Type | parts by weight |
| Comp. Ex. 4 | I-1 | 100 | - | - | - | - | - | - | - | - | - | - | - | - |
| Comp. Ex. 5 | I-2 | 35 | II-1 | 65 | - | - | - | - | - | - | - | - | - | - |

(2) Moulding of fiber reinforced composition

The obtained pellets and glass fiber containing pellets (II-2) were used for injection moulding under the above conditions to obtain the specimens of the respective fiber reinforced compositions. In Examples 8 and 9, II-2 was mixed so that the actual amount of the component (II) (fiber) is 10% by weight (i.e., the proportion shown in Table 3) prior to moulding. The component (II) in the moulded articles of Examples 8 and 9 had an average length of 0.8 mm and 0.9 mm, respectively.

(3) Evaluation

The moulded articles were evaluated for the properties thereof. Results are shown in Table 4.

Table 4

| | Evaluation | | | | | | | | | | |
| | Moulding shrinkage ratio | Grain transferability | | | Flaw resistance | Surface hardness | HDD/flexural modulus | Rigidity | Impact | HDT (0.45) | Weld |
| | | Mirror surface gloss | Grained surface gloss | Gloss ratio | | HDD (D hardness) | | Flexural modulus | 23°C Charpy impact strength | | |
| | 1/1000 | % | % | - | N | - | - | MPa | kJ/m2 | °c | - |
| Ex. 1 | 3.5 | 72.1 | 1.4 | 0.019 | 7 | 53 | 0.056 | 953 | 13.3 | 108.4 | ○ |
| Ex. 2 | 2.7 | 74.2 | 1.3 | 0.018 | 10 | 58 | 0.046 | 1260 | 23.0 | 110.2 | ○ |
| Ex. 3 | 2.9 | 76.8 | 1.5 | 0.020 | >13 | 58 | 0.042 | 1384 | 21.1 | 109.8 | ○ |
| Ex. 4 | 2.3 | 63.5 | 1.2 | 0.019 | 10 | 61 | 0.046 | 1758 | 23.8 | 113.3 | Δ |
| Ex. 5 | 2.6 | 67.8 | 1.3 | 0.019 | >13 | 61 | 0.035 | 1855 | 21.7 | 112.9 | Δ |
| Ex. 6 | 3.1 | 75.6 | 1.5 | 0.020 | 10 | 66 | 0.045 | 1453 | 18.2 | 110.5 | ○ |
| Ex. 7 | 2.7 | 77.2 | 1.7 | 0.022 | >13 | 69 | 0.031 | 2195 | 17.1 | 110.1 | Δ |
| Ex. 8 | 2.1 | 82.1 | 1.2 | 0.015 | 10 | 58 | 0.045 | 1290 | 28.2 | 110.8 | Δ |
| Ex. 9 | 2.3 | 84.8 | 1.4 | 0.017 | >13 | 58 | 0.042 | 1395 | 25.8 | 110.2 | Δ |
| Ex. 10 | 2.2 | 70.3 | 1.6 | 0.023 | 7 | 48 | 0.045 | 1070 | 31.3 | 96.9 | @ |
| Ex. 11 | 3.2 | 66.3 | 1.5 | 0.023 | 7 | 51 | 0.039 | 1300 | 20.1 | 115.2 | ○ |
| Ex. 12 | 1.9 | 73.2 | 1.5 | 0.021 | 7 | 72 | 0.017 | 4218 | 16.0 | 121.0 | ○ |
| Ex. 13 | 2.0 | 77 | 1.1 | 0.014 | >13 | 62 | 0.030 | 2100 | 23.0 | 114.0 | @ |
| Ex. 14 | 3.4 | 72.2 | 1.7 | 0.024 | 7 | 64 | 0.042 | 1510 | 14.4 | 126.4 | Δ |
| Ex. 15 | 2.7 | 67 | 1.8 | 0.027 | 7 | 73 | 0.026 | 2788 | 20.2 | 122.0 | Δ |
| Ex. 16 | 1.7 | 76 | 1.3 | 0.017 | 7 | 59 | 0.024 | 2467 | 17.4 | 85.4 | Δ |
| Com. Ex. 1 | 5.0 | 65.3 | 1.5 | 0.023 | 5 | 60 | 0.027 | 2250 | 11.0 | 151.3 | × |
| Com. Ex. 2 | 5.3 | 37.6 | 1.2 | 0.032 | 5 | 55 | 0.028 | 1970 | 19.7 | 130.6 | × |

(continued)

| | Evaluation | | | | | | | | | | | |
|---|---|---|---|---|---|---|---|---|---|---|---|---|
| | Moulding shrinkage ratio | Grain transferability | | | Flaw resistance | Surface hardness | HDD/flexural modulus | Rigidity | Impact | HDT (0.45) | Weld |
| | | Mirror surface gloss | Grained surface gloss | Gloss ratio | | HDD (D hardness) | | Flexural modulus | 23°C Charpy impact strength | | |
| | 1/1000 | % | % | - | N | - | - | MPa | kJ/m2 | °c | - |
| Com. Ex. 3 | 7.1 | 85.5 | 1.7 | 0.020 | 3 | 50 | 0.106 | 470 | 29.0 | 70.7 | ○ |
| Com. Ex. 4 | 8.8 | 85.3 | 1.2 | 0.014 | 10 | 48 | 0.191 | 251 | 88.0 | 55.0 | @ |
| Com. Ex. 5 | - | - | - | - | - | - | - | - | - | - | - |

4. Evaluation

According to the results shown in Tables 3 and 4, Examples 1 to 16 which satisfy the requirements of the fiber reinforced composition and the moulded article thereof of the present invention have low shrinkage, preferable grain transferability, flaw resistance and weld appearance, provide the moulded articles having a smooth and soft tactile sensation on the surface thereof and further have high rigidity, high impact strength and high heat resistance.

Thus it is apparent that they can be suitably used for automobile interior and exterior parts such as instrument panels, glove compartments, console boxes, door trims, armrests, grip knobs, various trims, ceiling parts, housings, pillars, mud guards, bumpers, fenders, back doors, fan shrouds and the like as well as parts in engine compartments, parts for electric/electronic devices such as televisions and vacuum cleaners, various industrial parts, parts for household facilities such as toilet seats, building materials and the like.

On the other hand, Comparative Examples which do not satisfy the matters specifying the present invention, namely the fiber reinforced compositions and moulded articles thereof with the compositions of Comparative Examples 1 to 4, have poor balances between the properties and are inferior to Examples 1 to 16.

For example, (1) Comparative Example 1 which did not contain the component (I) but contained the propylene polymer resin (V) showed a significant difference to Example 2 in the moulding shrinkage ratio, grain transferability, flaw resistance, impact strength and weld appearance, the reason for which is believed that the component (I), that is a necessary component for the present invention, is not used. Comparative Example 1 had a moulding shrinkage ratio of 5.0/1000, a moulding shrinkage ratio in MD of 4.0/1000 and in TD of 6.0/1000. Thus the difference in the shrinkage ratio in these directions was 2.0/1000. This difference indicates the moulding anisotropy, which is preferably low in view of less deformation such as moulding warp. Specifically, the difference is preferably less than 2.0/1000 and still more preferably 1.5/1000 to 0.5/1000. Examples 2 had a moulding shrinkage ratio of 2.7/1000, a moulding shrinkage ratio in MD of 2.0/1000 and in TD of 3.3/1000, resulting in the difference in these directions of 1.3/1000.

(2) Comparative Example 2 which again did not contain the component (I) but contained the propylene polymer resin (V) showed a significant difference to Example 2 in the moulding shrinkage ratio, grain transferability, flaw resistance and weld appearance, the reason for which is believed that the component (I), that is a necessary component for the present invention, is not used. Comparative Example 2 had a moulding shrinkage ratio of 5.3/1000, a moulding shrinkage ratio in MD of 4.0/1000 and in TD of 6.5/1000, resulting in the difference in these directions of 2.5/1000.

(3) Comparative Example 3 which did not contain the component (II) but contained talc showed a significant difference to Example 2 in the moulding shrinkage ratio, flaw resistance, HDD/flexural modulus, flexural modulus and HDT (0.45MPa), the reason for which is believed that talc does not satisfy the requirements for the component (II) that is necessary to the present invention.

Comparative Example 5 contained a low amount of the component (I) which rendered kneading impossible, resulting in failure of obtainment of the specimen for evaluation of properties.

INDUSTRIAL APPLICABILITY

The fiber reinforced polypropylene resin composition, the method for producing thereof and the moulded article thereof of the present invention have low shrinkage, have preferable grain transferability, flaw resistance and moulded appearance, can provide a moulded article having a smooth and soft tactile sensation on the surface thereof without foaming and have high rigidity, high impact strength and high heat resistance. The fiber reinforced polypropylene resin composition and the moulded article thereof of the present invention provide the above tactile sensation, and thus do not require lamination with other moulded article parts having a soft tactile sensation such as expansion moulded articles, contributing to further reduction in cost.

The fiber reinforced polypropylene resin composition and the like of the present invention use economically advantageous components, can be produced by a simple production method and thus allow reduction in cost.

Therefore, the present invention can be suitably used for automobile interior and exterior parts such as instrument panels, glove compartments, console boxes, door trims, armrests, grip knobs, various trims, ceiling parts, housings, pillars, mud guards, bumpers, fenders, back doors, fan shrouds and the like as well as parts in engine compartments, parts for electric/electronic devices such as televisions and vacuum cleaners, various industrial parts, parts for household facilities such as toilet seats, building materials and the like.

Particularly, the combination of properties such as low shrinkage, a soft and smooth tactile sensation and highly balanced physical properties allows the present invention being used as automobile parts and thus provides significant industrial usefulness.

**Claims**

1. A fiber reinforced polypropylene resin composition comprising a propylene-ethylene block copolymer (I) at 40% by weight to 99% by weight and a fiber (II) at 1% by weight to 60% by weight, both of which are defined hereinbelow (provided that the total amount of (I) and (II) is 100% by weight), wherein the propylene-ethylene block copolymer (I) satisfies the following requirements (I-i) to (I-iv):

   (I-i): the propylene-ethylene block copolymer (I) is obtained by sequentially polymerizing, using a metallocene catalyst, 30% by weight to 95% by weight of propylene alone or propylene-ethylene random copolymer component (I-A) having an ethylene content of 7% by weight or less in a first step and 70% by weight to 5% by weight of propylene-ethylene random copolymer component (I-B) having an ethylene content that is 3% by weight to 20% by weight higher than that of the component (I-A) in a second step;
   (I-ii): the propylene-ethylene block copolymer (I) has a melting peak temperature (Tm), as measured by DSC, of 110°C to 150°C;
   (I-iii): the propylene-ethylene block copolymer (I) shows a single peak on a tan δ curve at or below 0°C in a temperature-loss tangent curve obtained by a solid viscoelasticity measurement; and
   (I-iv): the propylene-ethylene block copolymer (I) has a melt flow rate (MFR: 230°C, 2.16 kg load) of 0.5 g/10 min to 200 g/10 min, and wherein

   the fiber (II) satisfies the following requirement (II-i):

   (II-i): the fiber (II) is at least one selected from the group consisting of a glass fiber, a carbon fiber, a whisker and an organic fiber having a melting point of 245°C or more.

2. The fiber reinforced polypropylene resin composition according to claim 1, wherein the fiber (II) is the glass fiber.

3. The fiber reinforced polypropylene resin composition according to claim 2, wherein the glass fiber has a length of 2 mm or more and 20 mm or less.

4. The fiber reinforced polypropylene resin composition according to any one of claims 1 to 3, further comprising at least one selected from the group consisting of a modified polyolefin (III) at 0 to 10 parts by weight, a thermoplastic elastomer (IV) at 0 to 30 parts by weight, a propylene polymer resin (V) at 0 to 50 parts by weight and a fatty acid amide (VI) at 0 to 3 parts by weight, all of which are defined hereinbelow, relative to a total amount of (I) and (II) of 100 parts by weight, wherein the modified polyolefin (III) satisfies the following requirement (III-i):

   (III-i): the modified polyolefin (III) is an acid modified polyolefin and/or a hydroxy modified polyolefin;

   the thermoplastic elastomer (IV) satisfies the following requirements (IV-i) and (IV-ii):

   (IV-i) : the thermoplastic elastomer (IV) has a density of 0.86 $g/cm^3$ to 0.92 $g/cm^3$;
   (IV-ii) : the thermoplastic elastomer (IV) has a melt flow rate (230°C, 2.16 kg load) of 0.5 g/10 min to 100 g/10 min;

   the propylene polymer resin (V) is a resin other than the propylene-ethylene block copolymer (I) and satisfies the following requirement (V-i);

   (V-i): the propylene polymer resin (V) has a melt flow rate (230°C, 2.16 kg load) of 0.5 g/10 min to 300 g/10 min; and

   the fatty acid amide (VI) satisfies the following requirement (VI-i) :

   (VI-i): the fatty acid amide (VI) is represented by the following formula (A):

$$RCONH_2 \qquad \text{Formula (A)}$$

   (where, R is a linear aliphatic hydrocarbon group having 10 to 25 carbon atoms).

5. The fiber reinforced polypropylene resin composition according to claim 4, wherein the propylene polymer resin (V) further satisfies the following requirement (V-ii):

(V-ii): the propylene polymer resin (V) is a propylene-ethylene block copolymer resin containing a propylene homopolymer moiety at 30% by weight to 80% by weight and a propylene-ethylene copolymer moiety at 20% by weight to 70% by weight (where a total amount of the propylene homopolymer moiety and the propylene-ethylene copolymer moiety is 100% by weight), wherein the propylene-ethylene copolymer moiety has an ethylene content of 20% by weight to 60% by weight.

6. A method for producing the fiber reinforced polypropylene resin composition according to any one of claims 1 to 5, the method comprising a kneading step of melt-kneading the propylene-ethylene block copolymer (I) and the fiber (II).

7. The method for producing the fiber reinforced polypropylene resin composition according to claim 6, wherein the kneading step comprises kneading a component other than the fiber (II) prior to adding the fiber (II).

8. The method for producing the fiber reinforced polypropylene resin composition according to claim 6 or 7, wherein the fiber (II) (except for the whisker) in a resin composition pellet or a moulded article obtained after the kneading step has an average length, as measured on a digital microscope, of 0.3 mm or more and 2.5 mm or less.

9. A moulded article obtained by moulding the fiber reinforced polypropylene resin composition according to any one of claims 1 to 5.

10. A moulded article obtained by moulding a fiber reinforced polypropylene resin composition produced by the method according to any one of claims 6 to 8.

11. The moulded article according to claim 9 or 10, having a grained surface.

12. The moulded article according to claim 11, having a gloss ratio between a grained surface gloss value and a mirror surface gloss value, which corresponds to grained surface gloss value/mirror surface gloss value of 0.030 or less.

13. The moulded article according to any one of claims 9 to 12, having an average of a moulding shrinkage ratio in a resin flow direction (MD) and a moulding shrinkage ratio in the direction (TD) perpendicular to the resin flow direction of 4.0/1000 or less.

14. The moulded article according to any one of claims 9 to 13, having a flaw resistance according to a 5-finger method of 6 N or more.

15. The moulded article according to any one of claims 9 to 14, having HDD (D hardness)/flexural modulus (MPa) of 0.060 or less.

16. The moulded article according to any one of claims 9 to 15, having a deflection temperature under load (HDT), measured at a 0.45 MPa load, of 85°C or more.

17. The moulded article according to any one of claims 9 to 16, having an excellent weld appearance.

18. The moulded article according to any one of claims 9 to 17, which is an automobile part.

**Patentansprüche**

1. Faserverstärkte Polypropylenharzzusammensetzung umfassend 40 Gewichts-% bis 99 Gewichts-% Propylen-Ethylen-Block-Copolymer (I) und 1 Gewichts-% bis 60 Gewichts-% Faser (II), die beide wie folgt definiert sind (vorausgesetzt, dass die Gesamtmenge von (I) und (II) 100 Gewichts-% beträgt), wobei das Propylen-Ethylen-Block-Copolymer (I) die folgenden Bedingungen (I-i) bis (I-iv) erfüllt:

(I-i): das Propylen-Ethylen-Block-Copolymer (I) wird durch sequentielles Polymerisieren hergestellt, wobei ein Metallocen-Katalysator, in einem ersten Schritt 30 Gewichts-% bis 95 Gewichts-% Propylen allein oder eine statistische Propylen-Ethylen-Copolymerkomponente (I-A) mit einem Ethylengehalt von 7 Gewichts-% oder weniger und in einem zweiten Schritt 70 Gewichts-% bis 5 Gewichts-% einer statistischen Propylen-Ethylen-Copolymerkomponente (I-B) mit einem 3 Gewichts-% bis 20 Gewichts-% höherem Ethylengehalt als dem der Komponente (I-A) verwendet wird;

(I-ii): das Propylen-Ethylen-Block-Copolymer (I) hat eine Schmelztemperatur (Tm), mit DSC gemessen, von 110°C bis 150°C;

(I-iii): das Propylen-Ethylen-Block-Copolymer (I) zeigt einen einzelnen Peak auf einer tan $\delta$ Kurve bei 0°C oder weniger in einer Temperaturverlusts-Tangentenkurve, erhalten durch eine Messung der Viskoelastizität im festen Zustand; und

(I-iv): das Propylen-Ethylen-Block-Copolymer (I) hat eine Schmelzflussrate (MFR: 230°C, 2,16 kg Last) von 0,5 g/10 Min bis 200 g/10 Min, und wobei

die Faser (II) die folgende Bedingung (II-i) erfüllt:

(II-i): die Faser (II) ist wenigstens eine aus der Gruppe bestehend aus einer Glasfaser, Kohlenstofffaser, einem Haarkristall und einer organischen Faser mit einem Schmelzpunkt von 245°C oder mehr.

2. Faserverstärkte Polypropylenharzzusammensetzung nach Anspruch 1, bei der die Faser (II) eine Glasfaser ist.

3. Faserverstärkte Polypropylenharzzusammensetzung nach Anspruch 2, bei der die Glasfaser eine Länge von 2 mm oder mehr und 20 mm oder weniger hat.

4. Faserverstärkte Polypropylenharzzusammensetzung nach mindestens einem der Ansprüche 1 bis 3, weiterhin umfassend wenigstens einen Vertreter, ausgewählt aus der Gruppe bestehend aus 0 bis 10 Gewichtsanteilen eines modifizierten Polyolefins (III), 0 bis 30 Gewichtsanteilen eines thermoplastischen Elastomers (IV), 0 bis 50 Gewichtsanteilen eines Propylenpolymer-Harzes (V) und 0 bis 3 Gewichtsanteilen eines Fettsäureamids (VI), alle wie nachfolgend definiert, relativ zu einer Gesamtmenge von (I) und (II) von 100 Gewichtsanteilen, wobei das modifizierte Polyolefin (III) die folgende Bedingung (III-i) erfüllt:

(III-i): das modifizierte Polyolefin (III) ist ein säuremodifiziertes Polyolefin und/oder ein hydroxymodifiziertes Polyolefin;

das thermoplastische Elastomer (IV) die folgenden Bedingungen (IV-i) und (IV-ii) erfüllt:

(IV-i): das thermoplastische Elastomer (IV) hat eine Dichte von 0,86 g/cm$^3$ bis 0,92 g/cm$^3$;
(IV-ii): das thermoplastische Elastomer (IV) hat eine Schmelzflussrate (230°C, 2,16 kg Last) von 0,5 g/10 min bis 100 g/10 min;

das Propylenpolymerharz (V) ein anderes Harz als das Propylen-Ethylen-Block-Copolymer (I) ist und die folgende Bedingung (V-i) erfüllt;

(V-i): das Propylenpolymerharz (V) hat eine Schmelzflussrate (230°C, 2,16 kg Last) von 0,5 g/10 min bis 300 g/10 min; und

das Fettsäureamid (VI) die folgende Bedingung (VI-i) erfüllt;

(VI-i): das Fettsäureamid (VI) wird durch die folgende Formel (A) dargestellt:

$$RCONH_2 \qquad \text{Formel (A)}$$

(worin R eine lineare aliphatische Kohlenwasserstoffgruppe mit 10 bis 25 Kohlenstoffatomen darstellt).

5. Faserverstärkte Polypropylenharzzusammensetzung nach Anspruch 4, wobei das Propylenpolymerharz (V) zusätzlich die folgende Bedingung (V-ii) erfüllt;

(V-ii): das Propylenpolymerharz (V) ist ein Propylen-Ethylen-Block-Copolymerharz, das 30 Gewichts-% bis 80 Gewichts-% eines Propylen-Homopolymerteils und 20 Gewichts-% bis 70 Gewichts-% eines Propylen-Ethylen-Copolymerteils umfasst (wobei die Gesamtmenge des Propylen-Homopolymerteils und des Propylen-Ethylen-Copolymerteils 100 Gewichts-% ist), wobei der Propylen-Ethylen-Copolymerteil einen Ethylenanteil von 20 Gewichts-% bis 60 Gewichts-% hat.

6. Verfahren zur Herstellung der faserverstärkten Polypropylenharzzusammensetzung nach mindestens einem der Ansprüche 1 bis 5, wobei das Verfahren einen Knetschritt umfasst, in dem das Propylen-Ethylen-Block-Copolymer (I) und die Faser (II) schmelzgeknetet werden.

7. Verfahren zur Herstellung der faserverstärkten Polypropylenharzzusammensetzung nach Anspruch 6, bei dem der Knetschritt das Kneten einer anderen Komponente als der Faser (II) vor der Zugabe der Faser (II) umfasst.

8. Verfahren zur Herstellung der faserverstärkten Polypropylenharzzusammensetzung nach Anspruch 6 oder 7, bei dem die durchschnittliche Länge der Faser (II) (bis auf den Haarkristall) in einem Harzzusammensetzungspellet oder Formkörper, das/der nach dem Knetschritt erhalten wurde, gemessen mit einem digitalen Mikroskop, 0,3 mm oder mehr und 2,5 mm oder weniger beträgt.

9. Formkörper, erhalten durch das Formen der faserverstärkten Polypropylenharzzusammensetzung nach mindestens einem der Ansprüche 1 bis 5.

10. Formkörper, erhalten durch Formen einer faserverstärkten Polypropylenharzzusammensetzung hergestellt durch das Verfahren nach mindestens einem der Ansprüche 6 bis 8.

11. Formkörper nach Anspruch 9 oder 10, der eine körnige Oberfläche hat.

12. Formkörper nach Anspruch 11 mit einem Glanzverhältnis zwischen einem Wert des Glanzes einer körnigen Oberfläche und einem Wert des Glanzes einer Spiegeloberfläche, welches einem Wert des Glanzes einer körnigen Oberfläche/Wert des Glanzes einer Spiegeloberfläche von 0,030 oder weniger entspricht.

13. Formkörper nach mindestens einem der Ansprüche 9 bis 12 mit einer durchschnittlichen Formschrumpfungsrate in einer Harzflußrichtung (MD) und einer Formschrumpfungsrate in der Richtung (TD) rechtwinklig zur Harzflussrichtung von 4,0/1000 oder weniger.

14. Formkörper nach mindestens einem der Ansprüche 9 bis 13 mit einer Defektbeständigkeit nach der 5-Finger Methode von 6 N oder mehr.

15. Formkörper nach mindestens einem der Ansprüche 9 bis 14 mit einer HDD (D-Härte)/Elastizitätsmodul (MPa) von 0,060 oder weniger.

16. Formkörper nach mindestens einem der Ansprüche 9 bis 15, bei dem die Deflektionstemperatur unter Belastung (HDT), gemessen bei einer 0,45 MPa Last, 85°C oder höher beträgt.

17. Formkörper nach mindestens einem der Ansprüche 9 bis 16, bei dem das Aussehen von Schweißverbindungen exzellent ist.

18. Formkörper nach mindestens einem der Ansprüche 9 bis 17, der ein Automobilbauteil ist.


**Revendications**

1. Composition de résine de polypropylène renforcée par des fibres, comprenant un copolymère séquencé de propylène/éthylène (I) à raison de 40 % en poids à 99 % en poids et une fibre (II) à raison de 1 % en poids à 60 % en poids, tous deux étant définis ci-dessous (à condition que la quantité totale de (I) et (II) soit de 100 % en poids), dans laquelle :

le copolymère séquencé de propylène/éthylène (I) satisfait aux exigences (I-i) à (I-iv) suivantes : (I-i): le copolymère séquencé de propylène/éthylène (I) est obtenu par polymérisation séquentielle, à l'aide d'un catalyseur de métallocène, de 30 % en poids à 95 % en poids de propylène seul ou d'un composant de copolymère statistique de propylène/-éthylène (I-A) présentant une teneur en éthylène de 7 % ou moins en poids dans une première étape et de 70 % en poids à 5 % en poids d'un composant de copolymère statistique de propylène/éthylène (I-B) présentant une teneur en éthylène supérieure de 3 % en poids à 20 % en poids à celle du composant (I-A) dans une seconde étape ;

(I-ii) : le copolymère séquencé de propylène/éthylène (I) présente une température de pic de fusion (Tm), mesurée par DSC, de 110 °C à 150 °C ;

(I-iii) : le copolymère séquencé de propylène/éthylène (I) présente un pic unique sur une courbe de tan δ à une température de 0 °C ou en dessous de celle-ci sur une courbe de tangente de perte en fonction de la température obtenue par mesure de la viscoélasticité d'un solide ; et

(I-iv) : le copolymère séquencé de propylène/éthylène (I) présente un indice de fusion (MFR : 230 °C, charge de 2,16 kg) de 0,5 g/10 min à 200 g/10 min et dans laquelle :

la fibre (II) satisfait à l'exigence (II-i) suivante :

(II-i): la fibre (II) est au moins une fibre choisie dans le groupe constitué par une fibre de verre, une fibre de carbone, une barbe et une fibre organique possédant un point de fusion de 245 °C ou plus.

2.  Composition de résine de polypropylène renforcée par des fibres selon la revendication 1, dans laquelle la fibre (II) est une fibre de verre.

3.  Composition de résine de polypropylène renforcée par des fibres selon la revendication 2, dans laquelle la fibre de verre a longueur de 2 mm ou plus et de 20 mm ou moins.

4.  Composition de résine de polypropylène renforcée par des fibres selon l'une quelconque des revendications 1 à 3, comprenant en outre au moins une composition choisie dans le groupe constitué par une polyoléfine modifiée (III) à raison de 0 à 10 parties en poids, un élastomère thermoplastique (IV) à raison de 0 à 30 parties en poids, une résine de polymère de propylène (V) à raison de 0 à 50 parties en poids et un amide d'acide gras (VI) à raison de 0 à 3 parties en poids, tous étant définis ci-dessous, par rapport à la quantité totale de (I) et de (II) de 100 parties en poids, dans laquelle :

la polyoléfine modifiée (III) satisfait à l'exigence (III-i) suivante :

(III-i) : la polyoléfine modifiée (III) est une polyoléfine à modification acide et/ou une polyoléfine à modification hydroxy ;

l'élastomère thermoplastique (IV) satisfait aux exigences (IV-i) et (IV-ii) suivantes :

(IV-i) : l'élastomère thermoplastique (IV) présente une masse volumique de 0,86 g/cm³ à 0,92 g/cm³ ;
(IV-ii) : l'élastomère thermoplastique (IV) présente un indice de fusion (230 °C, charge de 2,16 kg) de 0,5 g/10 min à 100 g/10 min ;

la résine de polymère de propylène (V) est une résine différente du copolymère séquencé de propylène/éthylène (I) et satisfait à l'exigence (V-i) suivante :

(V-i) : la résine de polymère de propylène (V) présente un indice de fusion (230 °C, charge de 2,16 kg) de 0,5 g/10 min à 300 g/10 min ; et

l'amide d'acide gras (VI) satisfait à l'exigence suivante (VI-i) :

(VI-i) : l'amide d'acide gras (VI) est représenté par la formule (A) suivante :

RCONH₂          Formule (A)

(où R est un groupement hydrocarboné aliphatique linéaire contenant 10 à 25 atomes de carbone).

5.  Composition de résine de polypropylène renforcée par des fibres selon la revendication 4, dans laquelle la résine de polymère de propylène (V) satisfait en outre à l'exigence (V-ii) suivante :

(V-ii) : la résine de polymère de propylène (V) est une résine de copolymère séquencé de propylène/éthylène contenant un fragment d'homopolymère de propylène à raison de 30 % en poids à 80 % en poids et un fragment de copolymère de propylène/éthylène à raison de 20 % en poids à 70 % en poids (la quantité totale du fragment d'homopolymère de propylène et du fragment de copolymère de propylène/éthylène étant de 100 % en poids), dans laquelle le fragment de copolymère de propylène/éthylène présente une teneur en éthylène de 20 % en poids à 60 % en poids.

6. Procédé de production de la composition de résine de polypropylène renforcée par des fibres selon l'une quelconque des revendications 1 à 5,
   le procédé comprenant une étape de malaxage à l'état fondu du copolymère séquencé de propylène/éthylène (I) et de la fibre (II).

7. Procédé de production de la composition de résine de polypropylène renforcée par des fibres selon la revendication 6, dans lequel l'étape de malaxage comprend le malaxage d'un composant différent de la fibre (II) avant l'addition de la fibre (II).

8. Procédé de production de la composition de résine de polypropylène renforcée par des fibres selon la revendication 6 ou 7, dans lequel la fibre (II) (sauf pour la barbe) dans une pastille de composition de résine ou un article moulé obtenu après l'étape de malaxage présente une longueur moyenne, telle que mesurée à l'aide d'un microscope numérique, de 0,3 mm ou plus et de 2,5 mm ou moins.

9. Article moulé obtenu par le moulage de la composition de résine de polypropylène renforcée par des fibres selon l'une quelconque des revendications 1 à 5.

10. Article moulé obtenu par le moulage d'une composition de résine de polypropylène renforcée par des fibres produite par le procédé selon l'une quelconque des revendications 6 à 8.

11. Article moulé selon la revendication 9 ou la revendication 10, présentant une surface grainée.

12. Article moulé selon la revendication 11, présentant un rapport de brillance entre une valeur de brillance de la surface grainée et une valeur de brillance de la surface spéculaire, qui correspond au rapport de la valeur de brillance de la surface grainée à la valeur de la brillance de la surface spéculaire de 0,030 ou moins.

13. Article moulé selon l'une quelconque des revendications 9 à 12, présentant une moyenne d'un taux de retrait au moulage dans le sens d'écoulement (MD) de la résine et d'un taux de retrait au moulage dans le sens travers (TD) perpendiculaire au sens d'écoulement de la résine de 4,0/1000 ou moins.

14. Article moulé selon l'une quelconque des revendications 9 à 13, présentant une résistance aux défauts selon un procédé à 5 doigts de 6 N ou plus.

15. Article moulé selon l'une quelconque des revendications 9 à 14, présentant un HDD (dureté D)/module de flexion (MPa) de 0,060 ou moins.

16. Article moulé selon l'une quelconque des revendications 9 à 15, présentant une température de déviation sous charge (HDT), mesurée sous charge de 0,45 MPa, de 85 °C ou plus.

17. Article moulé selon l'une quelconque des revendications 9 à 16 présentant un excellent aspect de soudage.

18. Article moulé selon l'une quelconque des revendications 9 à 17 qui est une pièce automobile.

FIG. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2002003691 A
- JP H748481 B
- JP 2011079924 A
- JP 2002206034 A
- JP H7292212 B
- JP 2009506177 W
- JP 2011132294 A
- JP 2002284808 A
- JP 2002053609 A
- JP 2002069116 A
- JP 2003105015 A
- JP S6354296 B
- JP H725960 B
- JP 2003002939 A
- WO 9104257 A
- JP H5295022 B

### Non-patent literature cited in the description

- **G. GLOCKNER.** *J. Appl. Polym. Sci.: Appl. Polym. Symp.,* 1990, vol. 45, 1-24
- **L. WILD.** *Adv. Polym. Sci.,* 1990, vol. 98, 1-47
- **J. B. P. SOARES ; A. E. HAMIELEC.** *Polymer,* 1995, vol. 36 (8), 1639-1654
- *Macromolecules,* 1988, vol. 21, 314-319
- *Macromolecules,* 1984, vol. 17, 1950
- **CARMAN.** *Macromolecules,* 1977, vol. 10, 536
- *Macromolecules,* 1982, vol. 15, 1150